# EUROPEAN PATENT APPLICATION

(11) **EP 4 559 797 A1**
(43) Date of publication of application: **28.05.2025**
(21) Application number: 23843233.0
(22) Date of filing: 07.07.2023
(51) Int. Cl.: B63B 3/48, B63B 25/00, B63B 73/50, B32B 15/08, B32B 15/18, B32B 3/30, B32B 7/027, B29C 45/16, B29C 35/02

(54) **COMPOSITE MATERIAL-BASED LIGHTWEIGHT STRUCTURAL MEMBER HAVING INTEGRATED PLATE REINFORCEMENT, SHIP DECK STRUCTURE MANUFACTURED USING SAME, AND METHOD FOR MANUFACTURING COMPOSITE MATERIAL-BASED LIGHTWEIGHT STRUCTURAL MEMBER HAVING INTEGRATED PLATE REINFORCEMENT**

(30) Priority: 21.07.2022 KR 20220090000
(71) Applicant: Chung, Tae Young, Seoul 05502 (KR)
(72) Inventor: PARK, Kong Ju, Seoul 05502 (KR); CHUNG, Tae Young, Seoul 05502 (KR)
(74) Representative: Witte, Weller & Partner Patentanwälte mbB
(86) International application number: PCT/KR2023/009646
(87) International publication number: WO 2024/019382

(57) **Abstract**

Disclosed are a composite material-based lightweight structural member having integrated plate reinforcement, and a ship deck structure manufactured using the same. The composite material-based lightweight structural member having integrated plate reinforcement, according to the present disclosure, performs the basic function of plate reinforcement by having a plurality of protrusions formed at regular intervals on the lower surface of a flat plate part, wherein the protrusions are produced so as to be integrated into the structure without a separate joining process such as welding or bolting, offering the advantages of being ultra-light and thin while exhibiting excellent structural performance and enabling the manufacture of a long-span structure, and thus can be used universally not only as a thin plate structure for a ship but also as a construction material.

## Description

### [Technical Field]

The present disclosure relates to a composite material-based lightweight structural member having an integrated plate reinforcement, a ship deck structure manufactured using the same, and a method for manufacturing the composite material-based lightweight structural member having an integrated plate reinforcement. More specifically, the present disclosure relates to a composite material-based lightweight structural member having an integrated plate reinforcement which fundamentally solves the problem of thermal deformation occurring due to welding of an upper plate and a plate reinforcement during a manufacturing process of steel plate structural members mainly used in shipbuilding, significantly reduces the overall weight of the structure, simplifies the manufacturing process, and has excellent performance in terms of vibration/noise reduction, a ship deck structure manufactured using the same, and a method for manufacturing the composite material-based lightweight structural member having an integrated plate reinforcement.

### [Background Art]

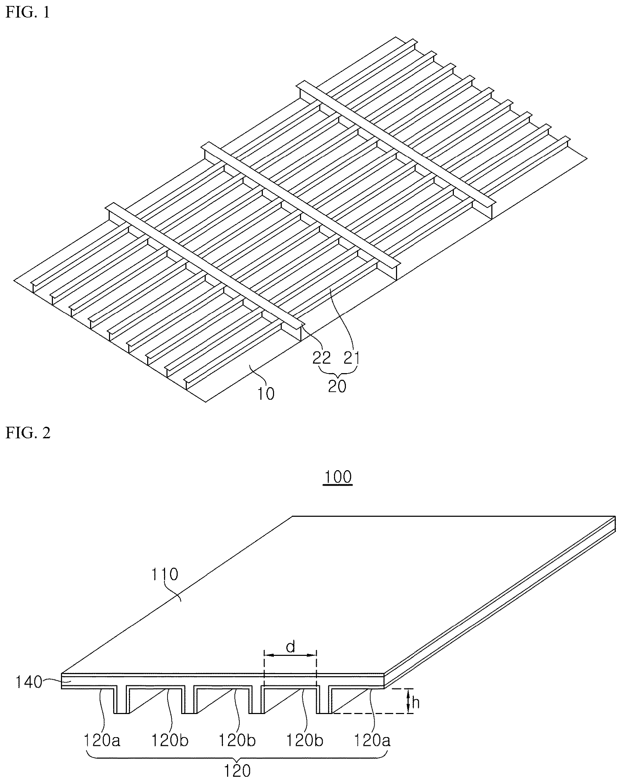

In general, a structural material mainly used in ships is a steel plate structural member made only of metal. As illustrated in FIG. 1, a conventional steel plate structural member for ships is manufactured by welding a plate reinforcement 20 made of metal to an upper plate 10 made of metal, and in this case, the plate reinforcement 20 includes a longitudinal girder 21 that reinforces a longitudinal structure and a transverse frame 22 that reinforces a transverse structure.

The conventional steel plate structural member is manufactured by first joining a metal plate that serves as the upper plate 10 and then welding plate reinforcements 20 for longitudinal strength reinforcement on the upper plate at intervals of 500 to 900 mm. However, when welding plate reinforcements 20 to the upper plate 10 at close intervals as in the conventional method, the following problems occur.

### (1) Problem of Thermal Deformation Due to Welding

The most fatal problem is thermal deformation caused by welding. When welding plate reinforcement 20, the welding area is heated to approximately 1,000 to 1,500°C, and considerable stress and deformation occur during the cooling process of the heated steel plate. As a result, after welding the plate reinforcement 20, a bending is inevitably formed with a deviation of several tens of millimeters (mm) per meter (m) throughout the plate, and therefore, a huge amount of time and cost occur in the subsequent correction work.

In particular, in the case of a structural member used for a car deck or a wall of a ship accommodation on a pure car carrier (PCC), a thin plate with the thickness of an upper plate of approximately 6 to 10 mm is required. In cases where the structure is formed with such a thin thickness, problems due to welding deformation, such as the upper plate itself being torn by welding deformation or being severely warped to the extent that the upper plate cannot be corrected by the subsequent correction process, occur to a much greater extent than in other areas.

Currently, in order to prevent the above problems from occurring, an upper plate that is much thicker than the structurally required thickness is simply used, or a huge amount of time and cost is spent to correct the thermal deformation in the subsequent process. Therefore, a more fundamental solution is needed.

Meanwhile, laser welding is a welding method known to have much less thermal distortion than arc welding or gas welding, which are commonly used in shipbuilding. The laser welding is a method for performing joining by concentrating light energy emitted from a laser source on a workpiece to melt a parent material. However, the laser welding has a limitation in generating enough power to melt the parent material, and a disadvantage in that welding speed and weldable thickness are determined by the thermal conductivity of the metal and the vaporization of the metal on the surface, not the power, and thus, the welding efficiency is greatly reduced when applied to thick parent materials.

It is generally known that the laser welding is possible up to 6 mm, but in reality, the speed of laser welding decreases significantly when the thickness is only 4 mm or more, and thus, the laser welding is generally applied mainly when the thickness of the parent material is 3 mm or less. In other words, it is not easy to apply the laser welding even to 6 mm steel plates, which are generally known as the thinnest structure in shipbuilding. In addition, a considerable amount of energy is required to melt the 6 mm thick upper plate, and even in this case, the welding area, which is formed quite widely, cools down and the same welding deformation occurs, so there is no great merit.

### (2) Weight Problem

Another disadvantage of conventional ship steel plate structural members is that the structural members are excessively heavy. Of course, the steel plate structural members mainly used in ships are much lighter than reinforced concrete for construction, but in terms of the growing importance of eco-friendly ships, cost reduction, and labor cost reduction, "weight reduction of the ship" is one of the biggest topics in the shipbuilding and shipbuilding industries worldwide. When the weight of a ship is reduced, the energy required for ship propulsion is reduced, so carbon emissions can also be reduced. In addition, the weight reduction of the ship is very important in terms of securing stability of a ship.

In particular, in the case of a pure car carrier (PCC) having multiple decks, the center of gravity of the ship moves upward due to the weight of the deck itself, and as a result, the stability of the ship is greatly impaired. Therefore, it can be said that it is a structure that requires the most important thing to achieve weight reduction of the ship by reducing the weight of the deck.

### (3) Problem of Low Usability as Building Structural Member

Even though the conventional steel plate structural members described above can implement equivalent structural performance with a much lighter weight and a thinner thickness than reinforced concrete, they are not widely used in the construction field. The biggest reason is the noise transmission characteristics of the steel plate. Since the entire structure of the steel plate structural member is constituted by a single high-density metal, when the steel plate structural member is subjected to an impact, the noise transmission ability thereof is superior to that of any other structural material made of other materials, and therefore the steel plate structural member is rarely used as a building material, especially as a building flooring material where prevention of inter-floor noise is important.

In addition, steel plate structural members are not suitable as building materials where insulation is important because of their excessively high thermal conductivity. The thermal conductivity of reinforced concrete is 1.6 ~ 2.0 W/mK, while that of steel plate is very high at 83 W/mK. High thermal conductivity means that external heat is transferred to the inside very quickly and easily, making it very vulnerable in terms of insulation.

### [Disclosure]

### [Technical Problem]

A purpose of the present disclosure is to provide a high-performance/multifunctional composite material-based lightweight structural member having integrated plate reinforcement, which can be effectively applied to a thin plate structure of a ship and can also be universally applied to the construction field (particularly, a floor structure of building) in order to overcome the technical limitations described above.

More specifically, an object of the present disclosure is to provide a composite material-based lightweight structural member having an integrated plate reinforcement, which can solve the problem of thermal deformation due to welding of conventional ship steel plate structural members by eliminating the process of joining lower plate reinforcement required in conventional ship steel plate structural members, can achieve structural lightweight by being very light compared to conventional ship steel plate structural members as well as any other structural materials, and can be applied to a construction filed.

In addition, an object of the present disclosure is to provide a composite material-based lightweight structural member having an integrated plate reinforcement, which can have an upper plate of a similar thickness to the steel plate structural member for the general ship while being based on a composite material, and can be implemented in a similar shape and assembly method to those of the steel plate structural members for the general ships to be easily utilized as a ship structure, and in particular, can be utilized in the manufacturing of the deck structure of the ship such as a pure car carrier (PCC).

The technical problems of the present disclosure are not limited to the technical problems mentioned above, and other technical problems not mentioned will be clearly understood by those skilled in the art from the description below.

### [Technical Solution]

According to one aspect of the present disclosure for achieving the above objects, there is provided a composite material-based lightweight structural member having an integrated plate reinforcement, including: a flat metallic upper plate; a plurality of metal reinforcement plates including a horizontal plate formed in a horizontal direction and a vertical plate bent downward from the horizontal plate and arranged at a predetermined interval below the upper plate; and a non-metallic core layer formed in a space between the upper plate and the reinforcement plate and a space between the adjacent reinforcement plates, in which the vertical plates formed in a plurality are formed in such a way that they are close to each other and face each other to form a pair, and a pair of vertical plates and a core layer formed therebetween form a protrusion that functions as a plate reinforcement, and the protrusions are formed at a regular interval along the horizontal direction and extend while maintaining a constant cross-sectional shape along a longitudinal direction.

The core layer may be formed of a non-foaming polymer.

The horizontal plate and the vertical plate constituting the reinforcement plate may be formed by bending a single plate.

A lower end of the protrusion may be re-bent or a separate metal finishing member may be coupled to the lower end of the protrusion, so that the lower end of the protrusion has an "L"-shaped cross-section or a " 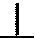 "-shaped cross-section, and a vertical reinforcing portion formed vertically from the protrusion may perform a function of a web of the plate reinforcement, and a vertical reinforcing portion formed horizontally from the protrusion may perform a function of a flange of the plate reinforcement.

Each of remaining reinforcement plates, excluding the reinforcement plates arranged at at least both ends along a width direction among the plurality of plates, may have a "□"-shaped cross-section, the composite material-based lightweight structural member may further include a lower plate arranged at a predetermined interval below the reinforcement plates, the core layer may be additionally formed between the reinforcement plate and the lower plate, and the overall structure of the composite material-based lightweight structural member having an integrated plate reinforcement according to one aspect of the present disclosure may be manufactured to include a ladder shape.

A high-performance insulating material having a thermal conductivity of 0.02 W/mK or less may be additionally disposed inside the core layer.

The high-performance insulating material may be a vacuum insulation panel (VIP).

The composite material-based lightweight structural member having an integrated plate reinforcement according to one aspect of the present disclosure may further include a side end finishing member that finishes both ends of the upper plate and the reinforcement plate, in which the side end finishing member may be inserted between the upper plate and the reinforcement plate, and may be pushed by a predetermined distance from the ends of the upper plate and the reinforcement plate.

When the adjacent lightweight structural members are connected to each other, the upper plates facing each other and the lower plates facing each other may be joined by welding, and the non-foaming polymer concentrate may be injected into a space formed between the upper plate, the lower plate, and the side end finishing member and cured to airtightly finish the connection area.

The composite material-based lightweight structural member having an integrated plate reinforcement according to one aspect of the present disclosure may further include a side end finishing member that finishes both ends of the upper plate and the reinforcement plate, in which the side end finishing member may be provided in a straight line shape or an angle shape having a cross-section of an " 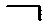 " shape, one end of the side end finishing member may be inserted between the upper plate and the reinforcement plate, and the other end of the side end finishing member may protrude outward from the upper plate and the reinforcement plate.

When the adjacent lightweight structural members are connected to each other, the facing side end finishing members may be structurally coupled to each other through welding or bolting.

In addition, in order to achieve the above objects, the present disclosure may provide a ship deck structure manufactured using the lightweight structural member including at least one of the above features.

Here, the ship may be a pure car carrier (PCC).

In addition, according to another aspect of the present disclosure for achieving the above objects, there is provided a method for manufacturing a composite material-based lightweight structural member having an integrated plate reinforcement, the lightweight structural member including a flat metallic upper plate, a plurality of metal reinforcement plates arranged at a predetermined interval below the upper plate and including a horizontal plate formed in a horizontal direction and a vertical plate bent downward from the horizontal plate, and a core layer formed in a space between the upper plate and the reinforcement plate and a space between the adjacent reinforcement plates, the method including: filling a space between the upper plate and the reinforcement plate and a space between the adjacent reinforcement plates with a non-foaming polymer concentrate; curing the non-foaming polymer concentrate; and completing formation of the core layer by the curing of the non-foaming polymer concentrate.

In the filling of the spaces with the non-foaming polymer concentrate, a space may be formed on the upper plate, the non-foaming polymer concentrate may be poured, and the reinforcement plate may be inserted from above in a state of being turned over to pressurize to a position at a predetermined distance from the upper plate, so that the non-foaming polymer concentrate may evenly fill the space between the reinforcement plates by penetrating into the space while overcoming frictional resistance due to viscosity by a pressing force of the reinforcement plate.

An amount of the non-foaming polymer concentrate initially poured into the space on the upper plate may be injected in an amount at least 2% more than an actual volume occupied by the core layer, and an excess amount may be pushed out and discharged by the pressing force of the reinforcement plate.

In the filling of the spaces with the non-foaming polymer concentrate, a space where the core layer is to be formed may be sealed, and the non-foaming polymer concentrate may be injected into the sealed space using an injection tube, and the injection tube may be divided into several small tubes and disposed in the sealed space.

In the filling of the spaces with the non-foaming polymer concentrate, a space where the core layer is to be formed may be sealed, an injection tube may be inserted into one side of the sealed space to inject the non-foaming polymer concentrate, and a vacuum pump may be used on the other side of the sealed space to suck air within the sealed space.

In at least any one of the filling of the spaces with the non-foaming polymer concentrate and the curing of the non-foaming polymer concentrate, a magnet may be disposed on at least one surface of the upper plate and the reinforcement plate or sucked by a vacuum suction device to apply a tensile force to maintain flatness and maintain an accurate angle.

### [Advantageous Effects]

The composite material-based lightweight structural member having an integrated plate reinforcement according to the present disclosure can be effectively applied to a thin-plate structure of a ship, and can also be universally applied to a construction field (particularly, floor structures for construction), and has the following specific effects.
(1) Since the process of joining lower plate reinforcement required in conventional ship steel plate structural members is eliminated, the problem of thermal deformation due to welding of conventional ship steel plate structural members may be fundamentally solved.
(2) The composite material-based lightweight structural member having an integrated plate reinforcement according to the present disclosure is very light compared to any other structural materials as well as conventional ship steel plate structural members, and thus it is possible to achieve structural lightweighting. In other words, when used as a structure for a ship or building, it has the effect of decreasing the overall weight of the structure.
(3) The composite material-based lightweight structural member having an integrated plate reinforcement according to the present disclosure can be manufactured with a thickness similar to that of the steel plate structural member for the general ship while being based on a composite material, and since the shape and assembly method are implemented similarly to those of the steel plate structural member for the general ship, it may be easily used in the manufacture of a ship structure. Preferably, the composite material-based lightweight structural member having an integrated plate reinforcement according to the present disclosure can be utilized as a ship deck structure, and in particular, it is expected to have excellent usability when used in the manufacture of a deck structure of a personal car carrier (PCC) where weight reduction of the ship is required most importantly.
(4) The composite material-based lightweight structural member having an integrated plate reinforcement according to the present disclosure can be manufactured with a significantly thinner structure among composite material-based structural members, and can be manufactured at a lower cost compared to general steel plate structural members used in existing ships, so it also has an advantage in terms of cost.
(5) The composite material-based lightweight structural member having an integrated plate reinforcement according to the present disclosure may basically reduce noise and vibration and also have thermal insulation performance because the lightweight structural member is manufactured with a composite material of metal and polymer, so it has the advantage of being usable not only in the shipbuilding field but also as a construction structural material. In addition, when applied to the construction field, there is also the effect of being able to implement a multifunctional structure by overlapping the lightweight structural member according to the present disclosure and adding cooling/heating and fire resistance functions to the space between them.

The effects of the present disclosure are not limited to the effects mentioned above, and other effects not mentioned will be clearly understood by those skilled in the art from the description below.

### [Description of Drawings]

FIG. 1 is a view illustrating a steel plate structural member mainly used in conventional ships.
FIGS. 2 to 6 are views illustrating first to fifth embodiments of a lightweight structural member according to the present disclosure.
FIGS. 7 to 9 are views illustrating first to third side end finishing and connection structures of the lightweight structural member according to the present disclosure.
FIG. 10 and FIG. 11 are views illustrating the first and second lower end finishing structures of the lightweight structural member according to the present disclosure.
FIGS. 12 to 16 are views for explaining the first to fifth manufacturing methods of the lightweight structural member according to the present disclosure.
FIG. 17 is a view illustrating a structure in which a high-performance insulating material is included in a core layer of the lightweight structural member according to the present disclosure.
FIG. 18 is a view illustrating an exemplary embodiment in which a lightweight structural member according to the present disclosure is applied to a floor structure of a building.
FIGS. 19 to 22 are views illustrating first to fourth wall connection structures of the lightweight structural member according to the present disclosure.
FIG. 23 is a view illustrating a structure in which the lightweight structural members according to the present disclosure are overlapped with each other.
FIG. 24 and FIG. 25 are views illustrating first and second usage examples of an overlapping structure in which lightweight structural members according to the present disclosure are overlapped with each other.

### [Best Mode]

The purpose and technical configuration of the present disclosure and the detailed operation and effect thereof will be more clearly understood by the detailed description based on the drawings attached to the specification of the present disclosure.

The terminology used herein is only used to describe specific exemplary embodiments and is not intended to limit the present disclosure. For example, terms such as "consisting of" or "including" used herein should not be construed as necessarily including all of the various components or various steps described in the disclosure, but should be construed as not including some of the components or some of the steps, or may further include additional components or steps. In addition, the singular expressions used herein include plural expressions unless the context clearly indicates otherwise.

Hereinafter, the present disclosure will be described in detail by describing preferred exemplary embodiments of the present disclosure with reference to the attached drawings. The exemplary embodiments described below are provided so that those skilled in the art can easily understand the technical idea of the present disclosure, and should not be construed as limiting the present disclosure thereby, and it is obvious that the exemplary embodiments of the present disclosure can have various applications to those skilled in the art.

### I. Structure of Lightweight Structural Member

The lightweight structural member 100 according to the present disclosure may be constituted by a composite material of metal and non-metal, substantially including a metallic upper plate 110, a metal reinforcement plate 120, and a non-metallic core layer 140 formed therebetween, in which a protruding structure formed by the downwardly bent structure of the reinforcement plate 120 and the core layer 140 formed therebetween along a vertical direction functions as a plate reinforcement.

The lightweight structural member 100 according to the present disclosure may have various exemplary embodiments depending on the shape of the lower protrusion or the manufacturing method thereof. Hereinafter, with reference to FIGS. 2 to 6, the possible exemplary embodiments of the lightweight structural member 100 according to the present disclosure will be described one by one.

### (1) First Embodiment

Referring to FIG. 2, first, a first embodiment which is the most basic form of the lightweight structural member 100 according to the present disclosure will be described. Referring to FIG. 2, the lightweight structural member 100 according to the first embodiment of the present disclosure may include the flat metallic upper plate 110, the metal reinforcement plate 120 arranged at a predetermined interval below the upper plate 110 and having a structure bent downward to perform the function of a plate reinforcement, and a non-metallic core layer 140 formed in a space between the upper plate 110 and the reinforcement plate 120 and a space between the adjacent reinforcement plates 120.

The upper plate 110 may be provided in the shape of a square plate having a predetermined thickness.

The reinforcement plate 120 may be configured in a form in which a plate having a predetermined thickness is bent once or twice, and a downward bent structure may be formed by a portion that is bent in a vertical direction from a plate formed in a horizontal direction.

The reinforcement plate 120 may be manufactured separately into a plurality of components. The reinforcement plate 120 may include a first reinforcement plate 120a having an " 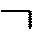 " shaped cross-section and a second reinforcement plate 120b having a " 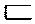 " shaped cross-section. The first reinforcement plates 120a may be disposed at both ends along a width direction of the lightweight structural member 100, and at least one second reinforcement plate 120b may be repeatedly disposed between the first reinforcement plates 120a. Moreover, the first reinforcement plates 120a and the second reinforcement plates 120b adjacent to each other are arranged so that leg portions that are arranged in the vertical direction face each other at a predetermined interval.

The core layer 140 may be formed in the space formed between the upper plate 110 and the reinforcement plate 120 and in the space between the adjacent reinforcement plates 120. The core layer 140 may be formed of a non-foaming polymer, more preferably, a non-foaming polyurethane having suitable elasticity and structural strength, and as described below, the core layer 140 may be formed by curing a non-foaming polymer concentrate filling the space.

The lightweight structural member 100 whose manufacturing is completed includes a flat plate part formed in the horizontal direction and a protrusion protruding downward from the lower surface of the flat plate part, and may have a structure in which two or more protrusions are repeatedly formed at regular intervals. Here, the flat plate part serves as a structural member that primarily comes into contact with the design load when constructing a floor structure such as a deck using the lightweight structural member 100, and the protrusion may function as a plate reinforcement that increases the strength and rigidity of the flat plate part formed in the horizontal direction, thereby enhancing structural performance and preventing buckling.

More specifically, in the lightweight structural member 100, the protrusions may be constituted by the leg portions of the reinforcement plates 120 that are disposed facing each other and the core layer 140 that fills the space between the leg portions, and this protrusion structure may perform the function of a web of the plate reinforcement.

Meanwhile, when the reinforcement plate 120 is configured in a bent shape of " 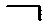 " or " 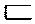 ", it is preferable to bend the metal plate constituting the reinforcement plate 120 through bending processing. This is to implement a structure that is structurally strong and free from concerns about thermal deformation or cracks due to welding by making the flat plate part formed in the horizontal direction and the protrusion formed in the vertical direction of the lightweight structural member 100 have a continuous shape without any discontinuity.

### (2) Second Embodiment

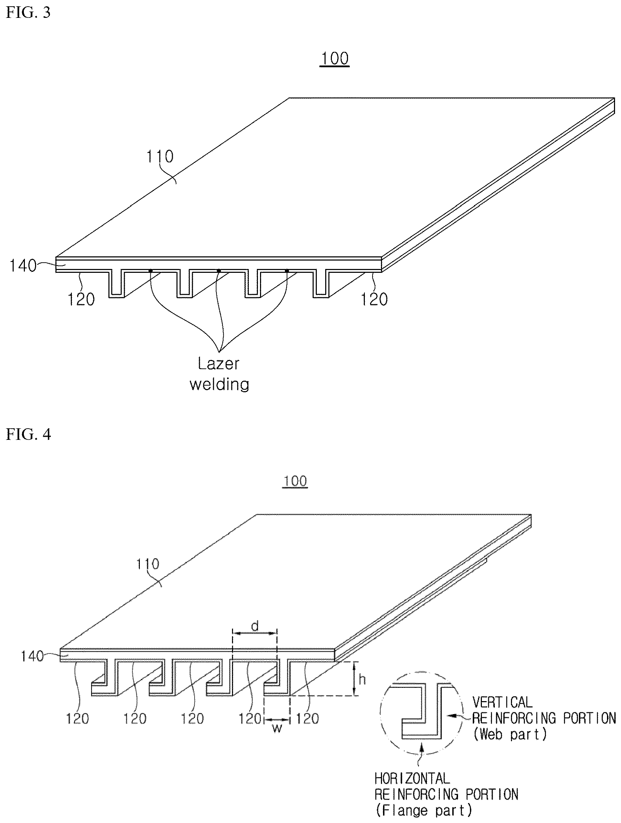

A second embodiment of the lightweight structural member 100 according to the present disclosure illustrated in FIG. 3 has the same completed structure as that of the first embodiment described above. However, the second embodiment differs from the first embodiment in that a plurality of reinforcement plates 120 is manufactured in the same shape having a cross-section having an approximately "T" shape, and the adjacent reinforcement plates 120 are connected by laser welding.

In this case, the reinforcement plate 120 is configured to include a space which is filled with the core layer 140 in a portion protruding downward, and therefore, a total of four bending processes are performed on one reinforcement plate 120.

Although this second embodiment has the inconvenience of requiring more bending of the reinforcement plate 120 compared to the first embodiment, since the reinforcement plate 120 is manufactured in a "T" shape and already includes a protruding structure and the lower end of the protruding structure is closed, it can be structurally more stable, and the work of forming the core layer 140 described later may also be performed more smoothly, which has the advantage.

### (3) Third Embodiment

Referring to FIG. 4, a lightweight structural member 100 according to a third embodiment of the present disclosure may have a structure in which the lower end portion of a protrusion protruding downward is re-bent in the horizontal direction. That is, the protrusion protruding downward from the lightweight structural member 100 has a cross-section having an approximately "L" shape.

Accordingly, in the third embodiment, the protrusion protruding downward of the lightweight structural member 100 may include a vertical reinforcing portion formed in the vertical direction and a horizontal reinforcing portion formed in the horizontal direction, and the vertical reinforcing portion may perform the function of a web of the plate reinforcement, and the horizontal reinforcing portion may perform the function of a flange of the plate reinforcement.

Meanwhile, FIG. 4 illustrates a structure in which the core layer 140 is exposed at the end of a horizontal reinforcing portion formed at the lower end of the protrusion, but the corresponding part may be configured as a structure blocked by a reinforcement plate 120 similar to the second embodiment described above.

### (4) Fourth Embodiment

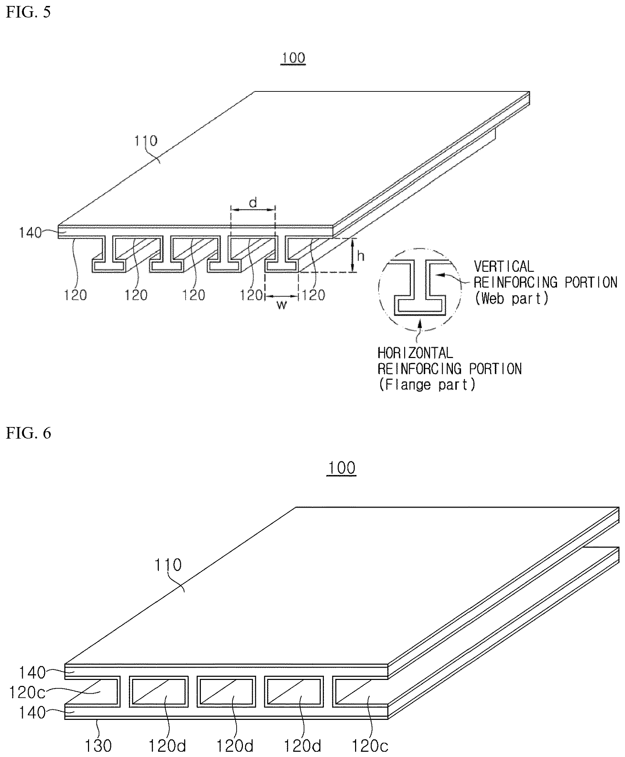

Referring to FIG. 5, a lightweight structural member 100 according to the fourth embodiment of the present disclosure may be configured to have a cross-sectional structure in an approximately " 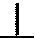 " shape, with a lower end portion of a protrusion protruding downwardly extending to both sides along the horizontal direction.

In the fourth embodiment, the protrusion protruding downward from the lightweight structural member 100 may include a vertical reinforcing portion formed in the vertical direction and a horizontal reinforcing portion formed in a horizontal direction, and the vertical reinforcing portion may perform the function of a web of the plate reinforcement and the horizontal reinforcing portion may perform the function of a flange of the plate reinforcement, which is similar to the third embodiment described above.

The lightweight structural member 100 according to the third and fourth embodiments may perform the function of a more effective plate reinforcement because a section modulus increases more significantly as the shape of the downward end of the protrusion is added.

### (5) Fifth Embodiment

Referring to FIG. 6, as still another exemplary embodiment, a fifth embodiment of the lightweight structural member 100 according to the present disclosure may be configured in a shape roughly like a ladder, including a flat metallic upper plate 110, a flat metallic lower plate 130 arranged parallel to the upper plate 110 at a position spaced apart from below the upper plate 110 at a predetermined interval, a plurality of reinforcement plates 120 arranged between the upper plate 110 and the lower plate 130, and a non-metallic core layer 140 formed in a space between the lower plates 130 and a space between the adjacent reinforcement plates 120.

The reinforcement plate 120 is spaced apart from the upper plate 110 at a predetermined interval so that a space can be formed between them, and likewise, the reinforcement plate 120 may be spaced apart from the lower plate 130 at a predetermined interval.

In the fifth embodiment, the reinforcement plate 120 may include a first reinforcement plate 120c having a " 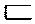 "-shaped cross-section and a second reinforcement plate 120d having a " 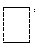 "-shaped cross-section, and the first reinforcement plates 120c may be disposed at both ends along the width direction of the lightweight structural member 100, and at least one second reinforcement plate 120d may be repeatedly disposed therebetween. The gaps between the first reinforcement plate 120c and the second reinforcement plate 120d and between the adjacent second reinforcement plates 120d may be formed to be the same.

The core layer 140 may be formed in the space between the upper plate 110 and the reinforcement plate 120, and the lower plate 130 and the space between the adjacent reinforcement plates 120, so that the reinforcement plate 120 is surrounded by the core layer 140.

In the lightweight structural member 100 according to the fifth embodiment of the present disclosure, a portion formed vertically by the reinforcement plate 120 and the core layer 140 may perform the function of a web of the plate reinforcement, and the structure of the core layer 140 formed horizontally between the reinforcement plate 120 and the lower plate 130 and the lower plate 130 attached to the lower end thereof may perform the function of a flange of the plate reinforcement.

In the lightweight structural member 100 according to the present disclosure including the first to fifth embodiments described above, a protrusion (in the fifth embodiment, a portion formed in the shape of a vertical column by facing reinforcement plates 120 and a core layer 140 formed therebetween may be the protrusion) protruding downward has the function of increasing the section modulus of the entire structure. The section modulus may be determined by the height or shape of the protrusion that functions as a plate reinforcing structure.

The conventional steel plate structural member (refer to FIG. 1) composed only of metal, which is mainly applied to a ship structure, has plate reinforcements 20 welded to a lower surface of an upper plate 10 for structural reinforcement. As explained in the background art, this conventional method has a problem in that significant thermal deformation occurs when the plate reinforcements 20 are connected by welding.

However, unlike conventional steel plate structural members in which the upper plate 10 and plate reinforcement 20 functioning as the structural members are manufactured separately and then joined by welding, the lightweight structural member 100 according to the present disclosure is configured in a form in which the flat plate part and the protrusion protruding therefrom are manufactured as an integral part, so that the plate reinforcing structure is already included within itself, and therefore there is absolutely no concern about the occurrence of thermal deformation problems due to welding as in the conventional case.

In addition, even when a case where the upper plate 10 and the plate reinforcement 20 are bolted together instead of being welded is assumed when manufacturing the conventional steel plate structural member, additional hole construction or local structural reinforcement work is required for bolting connection between the upper plate 10 and the plate reinforcement 20. In contrast, the lightweight structural member 100 according to the present disclosure in which the plate reinforcing structure is integrally formed does not require any of the above-mentioned additional processes, and thus may have structurally stable performance.

In addition, since the lightweight structural member 100 according to the present disclosure is in a form in which the plate reinforcing structure by the protrusion is already included in itself, it is possible to manufacture an optimized composite structure by forming the upper plate 110 and the reinforcement plate 120 into a much thinner structure compared to a case in which the coupling by the welding of the plate reinforcing structure is required.

In particular, the lightweight structural member 100 according to the present disclosure is characterized in that not only the flat plate part but also the protrusion that functions as the plate reinforcement is composed of a composite material (metal + polymer) rather than a single metal material, and according to the structure of the present disclosure, there is an advantage in that the structural weight may be reduced by about 40 to 50% compared to when the plate reinforcement made only of metal is used.

The thicknesses of the upper plate 110, the reinforcement plate 120, the lower plate 130, and the core layer 140 constituting the inner core that constitute the lightweight structural member 100 according to the present disclosure may be designed to a degree that the lightweight structural member 100 according to the present disclosure can implement structural performance equivalent to the structural strength of a general ship steel plate structural member.

Specifically, the thickness of each of the upper plate 110 and the reinforcement plate 120 of the lightweight structural member 100 according to the present disclosure may be 0.4 to 20 mm. In this case, as described below, in the lightweight structural member 100 according to the present disclosure, when it is desired to couple the individual modules to each other or to another structure, there are cases where a welding operation should be performed. Therefore, it is preferable that the thickness of each of the upper plate 110 and the reinforcement plate 120 constituting the outer plate of the lightweight structural member 100 is formed to be 0.4 mm or more, which facilitates laser welding. In addition, in order to achieve the structural lightweighting that is one of the technical challenges of the present disclosure, it is preferable that the thicknesses of the upper plate 110 and the reinforcement plate 120 are formed to be 10 mm or less, and therefore the present disclosure suggests 0.4 to 10 mm as a more preferable thickness of the metal plate constituting the upper plate 110 and the reinforcement plate 120. In the case where the lower plate 130 is further included as in the fifth embodiment, the thickness of the lower plate 130 follows the thickness of the upper plate 110.

The thickness of the core layer 140 of the lightweight structural member 100 according to the present disclosure may vary from 3 to 40 mm. In this case, the thickness of the core layer 140 may be different in the portion formed in the horizontal direction and the portion formed in the vertical direction (the portion formed between the facing reinforcement plates 120).

That is, in the lightweight structural member 100 according to the present disclosure, the thickness of the core layer 140 in the flat plate part and the thickness of the core layer 140 in the protrusion may be formed to be the same, but may also be adjusted differently. In the case where it is desired to form the thicknesses to be different, it is preferable that the thickness of the core layer 140 in the protrusion, which functions as the plate reinforcement, is formed to be thinner than the thickness of the core layer 140 in the flat plate part.

Meanwhile, there is something that should not be confused by the name of the member above. Only the upper plate 110 of the lightweight structural member 100 according to the present disclosure does not have to have the structural performance equivalent to that of the upper plate 10 of the steel plate structural member for the general ship. That is, it should be understood that, in the lightweight structural member 100 according to the present disclosure, the upper plate 110, the reinforcement plate 120, the core layer 140 formed therebetween, and the flat plate part that is formed in the horizontal direction and in direct contact with the design load, can be designed to have structural performance equivalent to that of the upper plate 10 of the steel plate structural member for the general ship. This also applies to determining the thicknesses of the reinforcement plates 120 constituting the plate reinforcing structure and the core layer 140 formed therebetween.

That is, in the lightweight structural member 100 according to the present disclosure, the structural strength of the entire flat plate part including the upper plate 110, the reinforcement plate 120, and the core layer 140 formed therebetween should be considered in order to correspond to the upper plate 10 of the steel plate structural member for the general ship, and therefore, in the lightweight structural member 100 according to the present disclosure, which is designed to have the structural performance equivalent to that of the steel plate structural member for the general ship, the thickness of the upper plate 110 will be much thinner than the upper plate 10 of the corresponding steel plate structural member for the general ship. For example, a composite structure of the lightweight structural member 100 according to the present disclosure, which is equivalent to a 6 mm upper plate 10 of the steel plate structural member for the general ship, may be formed by a 1 mm thick upper plate 110, a 5 mm thick core layer 140, and a 1 mm thick reinforcement plate 120.

In addition, a spacing d between the protrusion structures that perform the role of the web and/or flange structure of the plate reinforcement in the lightweight structural member 100 according to the present disclosure may be formed in a range of 200 to 3,000 mm. More preferably, the spacing d between the protrusions of the lightweight structural member 100 according to the present disclosure may be formed to be approximately 600 to 900 mm, which is a spacing similar to that of the steel plate structural member for the general ship, and when the thin thickness of the lightweight structural member 100 is sacrificed (for example, when the thickness is increased by disposing a high-performance insulating material 141 inside the core layer 140 as described below), the spacing d between the protrusion structures may be increased to 1,500 to 3,000 mm.

A width of the lightweight structural member 100 according to the present disclosure may be changed depending on the number of protrusions formed. For example, when the spacing between protrusions is uniformly 700 mm, in a case where the structure has 3 to 4 protrusions, the width of the entire plate may be formed approximately 2,100 to 3,500 mm.

A height h of the protrusion protruding downward from the lightweight structural member 100 may be formed at a level that has structural performance equivalent to that of the steel plate structural member for the general ship by comparing the section modulus of the entire structure, and may be manufactured to be similar to or lower than that of the existing plate reinforcement made only of metal. For example, when the height of the plate reinforcement of the existing steel plate structural member that is intended to implement the equivalent performance is 100 mm, the height h of the protrusion of the lightweight structural member 100 according to the present disclosure may also be formed at a similar level. However, as described above, as the shape of the protrusion is changed from a simple straight line shape to an "L" shape, a " 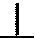 " shape, and a ladder shape, the section modulus of the entire structure increases, and accordingly, the height h of the protrusion may be further lowered. Here, the height h of the protrusion may mean the height from the lowest end of the reinforcement plate 120 to the lower surface of the reinforcement plate 120 forming a flat plate part formed in the horizontal direction.

In addition, when the lightweight structural member 100 according to the present disclosure is configured to further include a horizontal reinforcing portion formed horizontally at the lower end of the protrusion, as in the third and fourth embodiments (refer to FIGS. 4 and 5), a width w of the horizontal reinforcing portion may also be formed to have an equivalent size similar to that of the existing plate reinforcement for the steel plate structural member, as in the concept described above.

When the thickness, width, height, and the like of each configuration are designed within the range presented above, the lightweight structural member 100 according to the present disclosure may be manufactured into a long-span structure with a length of approximately 3 m to a maximum length of as much as 14 m. The reason why the lightweight structural member 100 according to the present disclosure can be manufactured into the long-span structure of up to 14 m is that the core layer 140 made of a non-foaming polymer, which has a specific gravity of 0.8 to 1.8 and is very lightweight compared to metal, is firmly joined between the upper plate 110 and the reinforcement plate 120 to provide the basic structural performance, and at the same time, the protrusion protruding downward from the lightweight structural member 100 functions as the plate reinforcement.

In addition, it is noteworthy that the lightweight structural member 100 according to the present disclosure manufactured with a long-span structure can exhibit the structural performance equivalent to or superior to that of the steel plate structural member for the general ship or the reinforced concrete for construction even without additional separate reinforcing materials in a direction transverse to the width of the structural material. That is, the steel plate structural member for the general ship illustrated in FIG. 1 has to be configured so that the plate reinforcement 20 includes both a longitudinal girder 21 that reinforces the longitudinal structure and a transverse frame 22 that reinforces the transverse structure, but in the lightweight structural member 100 according to the present disclosure, it is sufficient if a number of protrusions are formed only along the longitudinal direction at the lower portion of the plate structure, and there is no need to install a separate reinforcing structure along the width direction that transverses the protrusions.

The lightweight structural member 100 according to the present disclosure may be manufactured to satisfy a predetermined deflection amount standard, and this deflection amount standard may be satisfied by forming the section modulus of the entire structure to a predetermined level or higher through adjustment/selection of the height and shape of the protrusion that functions as the plate reinforcement as described above.

For example, when the total length of the lightweight structural member 100 according to the present disclosure is 6 m, the thickness of each of the upper plate 110 and the reinforcement plate 120 is formed as 1 mm, and the core layer 140 is formed as a thin core of 5 mm, in order to satisfy the L/480 deflection amount standard while forming a gap of 600 mm between protrusions under the conditions of a live load of 200 kgf/m² and fixed at both ends, the height h of the protrusion may be calculated to be approximately 125 mm when the protrusion has an "l" shape, approximately 100 mm when the protrusion has a " 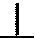 " shape in which the horizontal reinforcing portion with the width w of 100 mm is formed, and approximately 65 mm when the protrusion has a ladder shape.

In the above deflection amount standard, "L" refers to the length (span) of the lightweight structural member 100, and in order to satisfy the L/480 deflection amount standard, the central portion of the lightweight structural member 100 should not sag more than 1/480 of the total length of the lightweight structural member 100. As in the example given above, when the lightweight structural member 100 according to the present disclosure is manufactured to a length (span) of 6 m and both ends are fixed, the maximum deflection amount must be 6,000/480 = 12.5 (mm) or less to satisfy the L/480 deflection amount standard.

That is, the structural performance of the lightweight structural member 100 to satisfy the deflection amount standard may be implemented by adjusting the height or shape of the protrusion, and the like. In addition, by providing a certain level or higher of adhesive strength between the upper plate 110, the reinforcement plate 120, and the core layer 140, it may further help to implement the structural performance of the lightweight structural member 100 as described above.

Specifically, the non-foaming polymer constituting the core layer 140 has adhesive strength on its own, and as described below, during a process in which a liquid non-foaming polymer concentrate is cured, the surfaces in contact with the upper plate 110 and the reinforcement plate 120 are airtightly bonded. Therefore, in the present disclosure, an adhesive strength of 1 to 10 MPa, more preferably 6 MPa, may be imparted between the upper plate 110 and the core layer 140 and between the reinforcement plate 120 and the core layer 140. When the lower plate 130 is further included as in the fifth embodiment, the same adhesive strength may be imparted between the lower plate 130 and the core layer 140.

As will be described later, the lightweight structural member 100 according to the present disclosure may have the side end or the lower end portion finished with a non-metallic or metallic finishing member for structural connection with other modules in the future or for the purpose of optimizing structural strength or reinforcing fatigue strength required by the module itself. In this case, it is preferable that a bonding strength of at least 1 MPa (more preferably 6 MPa or more) is provided between the non-foaming polymer, which is the inner core, and the finishing member.

As described above, the lightweight structural member 100 according to the present disclosure has the material characteristics of being constituted by the composite material of the upper plate 110 and the reinforcement plate 120 made of metal and the core layer 140 made of a non-foaming polymer, and is configured to include a plate reinforcing structure itself, thereby enabling implementation of ultra-lightness and remarkably excellent structural performance.

Specifically, the lightweight structural member 100 manufactured using the composite material according to the present disclosure can implement the equivalent structural performance with approximately 50 to 60% of the weight compared to a general steel plate structural member mainly used in the shipbuilding field, and can implement the equivalent structural performance with approximately 15 to 25% of the weight compared to reinforced concrete mainly used in the construction field.

In addition, according to the general standard carbon emission table, steel plates and non-foaming polymers are known to generate 2 to 3 kg of CO₂ per kilogram (kg). However, the specific gravity of non-foaming polymer is 0.8 to 1.8, which is much lower than the specific gravity (7.85) of steel plate, so the carbon emissions generated during the structural manufacturing process are greatly reduced, and carbon emissions may be reduced by about 50% compared to the existing ones.

### II. Finishing and Connection Structure of Lightweight Structural Member

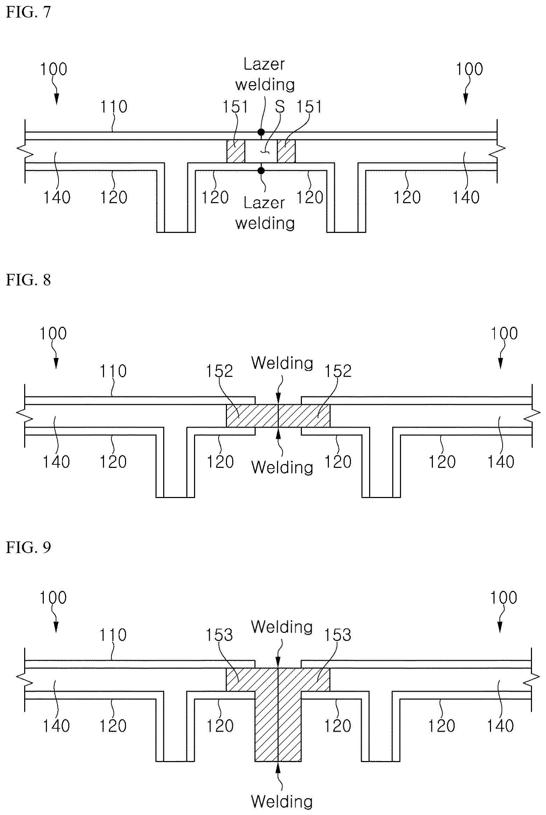

Hereinafter, the finishing and connection structure of the lightweight structural member 100 according to the present disclosure will be described with reference to FIGS. 7 to 11.

### (1) First Side End Finishing and Connection Structure

First, referring to FIG. 7, a first side end finishing member 151 made of a metal or non-metallic material may be inserted and disposed between the upper plate 110 and the reinforcement plate 120 at both end portions formed in the horizontal direction in the lightweight structural member 100 according to the present disclosure. Here, when the first side end finishing member 151 is made of a non-metallic material, it is preferable that the first side end finishing member is made of a material capable of producing a bonding strength of at least 1 MPa (more preferably, 6 MPa or more) with the non-foaming polymer, which is the inner core.

Moreover, in the adjacent lightweight structural members 100, the upper plates 110 disposed to be in contact with each other may be coupled to each other by laser welding and the reinforcement plates 120 disposed to be in contact with each other may be coupled to each other by laser welding. As described above, the laser welding has the advantage of less thermal deformation, but there is a problem that it is not easy to apply to general steel plate structural members for ships that are 6 mm or thicker due to the problem that the efficiency decreases as the thickness increases. However, the present disclosure uses a metal plate that is thinner than 6 mm (for example, 0.5 to 5 mm) as the upper plate 110 and the reinforcement plate 120, so it has an advantage in terms of application of laser welding.

In addition, in the present exemplary embodiment, the first side end finishing member 151 may be disposed by being pushed inward by a predetermined distance into the lightweight structural member 100, and according to this, when the adjacent lightweight structural members 100 are disposed in contact with each other to connect two or more lightweight structural members 100 to each other, a space S may be formed between the first side end finishing members 151 arranged on each lightweight structural member 100 facing each other, and by injecting and curing a non-foaming polymer concentrate (more preferably a non-foaming polyurethane concentrate) into the space S, the connection area of the adjacent lightweight structural members 100 may be airtightly finished. In this case, an additional effect of providing additional coupling force between the lightweight structural members 100 due to the self-adhesive force of the non-foaming polymer may also be achieved.

Meanwhile, the first side end finishing member 151 may be deleted and the non-foaming polymer, which is the core layer 130, may be left in a state of being exposed. However, even in this case, it is of course possible to apply the same method of forming the predetermined space S in the portion where the lightweight structural member 100 is connected and injecting the non-foaming polymer concentrate into the space S to perform airtightly sealing.

### (2) Second Side End Finishing and Connection Structure

Next, referring to FIG. 8, second side end finishing members 152 made of a metal material may be inserted and disposed at both end portions formed in the horizontal direction in the lightweight structural member 100 according to the present disclosure.

In the present exemplary embodiment, the second side end finishing member 152 may be provided as a metal plate having a cross-section in the straight line shape and a thickness corresponding to the core layer 140, and one end may be inserted into the interior of the lightweight structural member 100 and the other end may be exposed by protruding to the exterior of the lightweight structural member 100.

The second side end finishing member 152 protruding outward may be structurally connected to the second side end finishing member 152 provided on the side of the adjacent other lightweight structural member 100 through welding or bolting, and the like. In the case where the side end portion of the lightweight structural member 100 is finished with a metal material having a predetermined thickness as in the present exemplary embodiment, universal welding such as CO₂ welding can be applied, and in addition to welding, a mechanical joining method using bolts, and the like can be applied, which has the advantage of excellent design flexibility.

### (3) Third Side End Finishing and Connection Structure

Referring to FIG. 9, third side end finishing members 153 made of a metal material may be inserted and disposed at both end portions formed in the horizontal direction in the lightweight structural member 100 according to the present disclosure.

The third side end finishing and connection structure of the lightweight structural member 100 according to the present disclosure is similar to the second side end finishing and connection structure described just before. However, unlike the second side end finishing member 152 described above, which is provided in a simple straight line shape, the third side end finishing member 153 is provided in an angle shape with an " 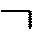 " shaped cross-section.

According to the present exemplary embodiment, when connecting two or more lightweight structural members 100 finished with third side end finishing members 153, the third side end finishing members 153 provided on each of the adjacent lightweight structural members 100 may be structurally joined together by welding or bolting in a state of being in contact with each other (welding and bolting connection can also be applied together). In the case where the cross-section of the third side end finishing member 153 is provided in an " 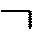 " shape as in the present exemplary embodiment, since a leg portion is present, it can be seen as a structure that is a little easier to apply the bolting connection method.

### (4) Lower End Finishing Structure

Meanwhile, for structural efficiency, the lower end of the protrusion performing the function of the plate reinforcement in the lightweight structural member 100 according to the present disclosure may be reinforced by finishing the lower end with a metal structure.

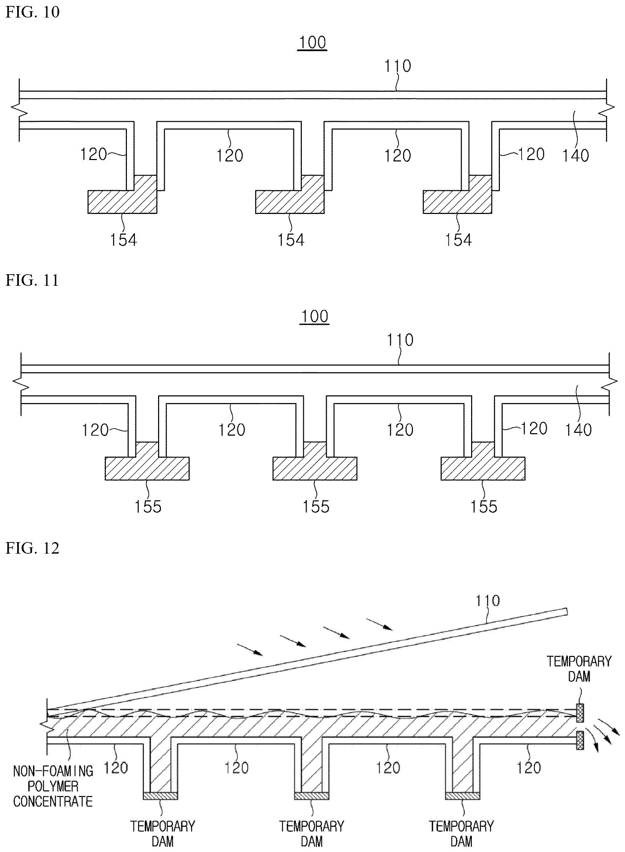

More specifically, a first lower end finishing member 154 having an "L" shaped cross-section as illustrated in FIG. 10 or a second lower end finishing member 155 having a " 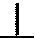 " shaped cross-section as illustrated in FIG. 11 may be inserted and joined to the lower end of the protrusion. However, in the case where the lower end of the protrusion of the lightweight structural member 100 according to the present disclosure, including the second embodiment illustrated in FIG. 3, is manufactured in a state where the lower end is already blocked, there is no need to apply the lower end finishing structure as described above.

In addition, even when the ends of the vertical structure (vertical reinforcing portion) that functions as the web of the plate reinforcement in the protrusion of the lightweight structural member 100 according to the present disclosure or the ends of the horizontal structure (horizontal reinforcing portion) that functions as the flange are not finished with metal, the cross-sectional moment of the structure is almost the same, so it does not have a significant effect on the overall structural performance. In other words, in terms of optimizing the structural performance, there is no significant difference between finishing the ends of the protrusion with metal or exposing the non-foaming polymer which is the core as is without finishing, and therefore, it will be possible to determine whether to apply the side end finishing structure or lower end finishing structure described above by considering whether there is the joint between the modules of the adjacent lightweight structural member 100 or other special purposes.

The finishing structure of the lightweight structural member 100 according to the present disclosure described above may have an additional function, such as sealing the space between the upper plate 110 and the reinforcement plate 120 during the manufacturing process of the lightweight structural member 100, in addition to the function of assisting the coupling and connection between two or more lightweight structural members 100.

In addition, the above finishing members 151/152/153/154/155 may be inserted between the upper plate 110 and the reinforcement plate 120 so that the contacting surfaces can be bonded by an adhesive, and the surface that contacts the core layer 140 may also be bonded by the self-adhesive force of the non-foaming polymer forming the core layer 140. Even when the finishing members 151/152/153/154/155 are made of metal, sufficient strength can be obtained simply by inserting and bonding without necessarily welding, and only in order to prevent the peeling phenomenon of the bonding surface, an adhesive strength of 1 to 10 MPa, more preferably 6 MPa, may be imparted between the upper plate 110 and the reinforcement plate 120 and the finishing members 151/152/153/154/155 in the same manner as described above.

Since the lightweight structural member 100 according to the present disclosure is formed with the upper plate 110 and reinforcement plate 120 having very thin thicknesses, thermal deformation may be minimized through the application of laser welding. In particular, since the core layer 140 is formed by curing after performing the filling with the non-foaming polymer, thereby ensuring structural strength, laser welding can be performed after the structural strength is achieved, thereby minimizing the welding deformation.

In addition, since the lightweight structural member 100 according to the present disclosure has a reinforcement plate 120 made of metal material forming a protrusion attached to the inner core layer 140 with an adhesive strength of 1 MPa or more, more preferably 6 MPa or more, the integral plate reinforcement function may be implemented without separate welding or with only minimal tag welding.

### III. Manufacturing Method of Lightweight Structural Member

Next, a specific manufacturing method of a lightweight structural member 100 according to the present disclosure will be described with reference to FIGS. 12 to 16.

The thickness of the plate reinforcement generally used in ships varies from 6 to 30 mm, but a thin thickness of about 6 to 15 mm is usually used. When the plate reinforcement is redisposed with the composite material structure of the non-foaming polymer and metal proposed in the present disclosure, a metal thin plate having a thickness of about 1 to 3 mm may be used for the upper plate 110 and the reinforcement plate 120, and the thickness of the non-foaming polymer constituting the core layer 140 may be formed into a very thin structure of about 5 to 15 mm.

However, it is not realistically easy to form the non-foaming polymer structure with such a thin thickness as mentioned above. This is because the non-foaming polymer concentrate has a viscosity higher than that of a lubricant before being cured, so when the space to be filled is too narrow, it is difficult to inject due to frictional resistance and it is difficult to spread evenly within the space. According to a certain ship regulation that specifies the basic performance and structural requirements of a ship considering the manufacturing characteristics of the composite material composed of the metal and non-foaming polymer, it is recommended that the metal plate is formed with a minimum thickness of 3 mm or more and the core composed of non-foaming polymer is formed with a thickness of 15 mm or more, and when this is not followed, separate approval should be obtained.

The manufacturing methods described below relate to a case where the core layer 140 of the lightweight structural member 100 is formed of a non-foaming polymer (for example, non-foaming polyurethane), and are proposed in particular to solve the manufacturing difficulty mentioned above, that is, the problem of difficulty in forming the core layer 140 composed of a non-foaming polymer with a thin thickness, and more preferably, a method is proposed that makes it possible to obtain a uniform core layer 140 by evenly filling the corresponding space with the non-foaming polymer even when the core layer 140 is formed with a thickness of 15 mm or less.

### (1) First Manufacturing Method

Referring to FIG. 12, a first manufacturing method of the lightweight structural member 100 according to the present disclosure is a method of pouring the non-foaming polymer concentrate on the reinforcement plate 120 to perform filling and covering the non-foaming polymer concentrate with the upper plate 110. When the lower end of the reinforcement plate 120 is open, a temporary dam may be used to form a sealed structure at the lower end, and a temporary dam may also be applied to the side surface of the reinforcement plate 120 so that the non-foaming polymer concentrate fills the space above the reinforcement plate 120 to a predetermined level. When the lower end of the reinforcement plate 120 is formed as a closed structure or is finished with a separate finishing member, it may not be necessary to apply the temporary dam, and this also applies to other manufacturing methods described below.

Meanwhile, the present manufacturing method is not a method of injecting the non-foaming polymer concentrate into a sealed space, but rather a method of pouring the non-foaming polymer concentrate into the open space to perform filling. As the process proceeds in an open cavity manner, air bubbles may be formed due to contact between the non-foaming polymer concentrate and air. When the air bubbles are not removed and remain inside the core layer 140, it may affect the structural performance, and therefore an additional process for removing the air bubbles is required.

To this end, in the present manufacturing method, the non-foaming polymer concentrate at least 2% more than the volume actually occupied by the core layer 140 fills the space on the reinforcement plate 120, and when covering the non-foaming polymer concentrate with the upper plate 110, the covering is not performed once with the entire plate, but the upper plate covers the surface of the non-foaming polymer concentrate while pushing the surface by slightly incline or curve the upper plate. That is, by using the upper plate 110 to cover the surface of the non-foaming polymer concentrate while pushing the non-foaming polymer concentrate from one side to the other, the excess of the non-foaming polymer concentrate can be pushed out of the panel, and the air bubbles may be removed through this process. When the lower end of the reinforcement plate 120 is formed in a closed structure, a separate hole may be formed for the purpose of overflow of the non-foaming polymer concentrate and an air vent.

### (2) Second Manufacturing Method

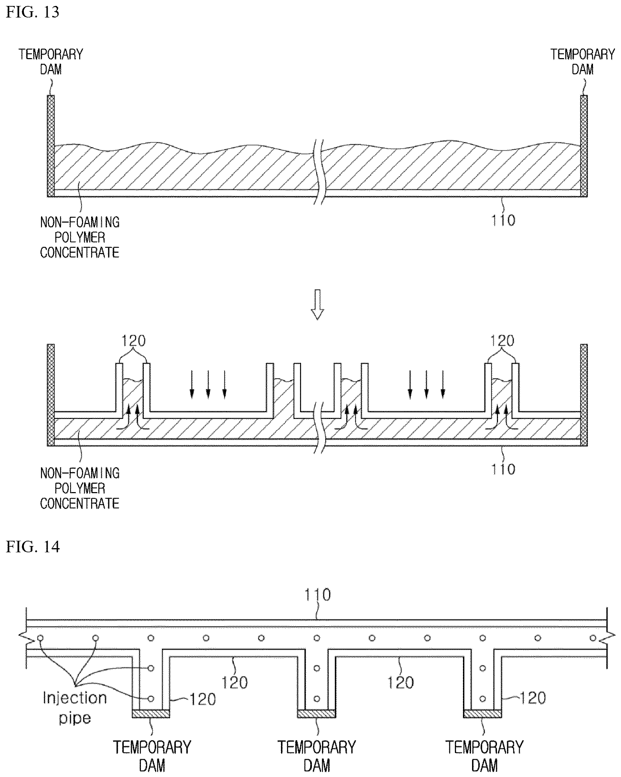

A progress of a second manufacturing method of the lightweight structural member 100 according to the present disclosure is explained with reference to FIG. 13.

First, a temporary dam is installed on the edge of the upper plate 110 in a state where the upper plate 110 is turned over, and a liquid non-foaming polymer concentrate is poured into a space formed by the upper plate 110 and the edge portion (temporary dam). In the present exemplary embodiment as well, an amount of non-foaming polymer concentrate that is at least 2% more than the amount that corresponds to the volume actually occupied by the core layer 140 may be initially filled.

Then, in a state where the non-foaming polymer concentrate is poured into the space of the upper plate 110, the reinforcement plate 120 is inserted from above and pressed down. The reinforcement plate 120 may be pressurized using a hydraulic device or the like until the gap between the reinforcement plate 120 and the upper plate 110 becomes a predetermined gap. In this case, a spacer may be disposed between the upper plate 110 and the reinforcement plate 120 in order to maintain the gap between the upper plate 110 and the reinforcement plate 120 at a designed thin thickness.

The non-foaming polymer concentrate filling the space of the upper plate 110 may penetrate into the vertical space (a thin gap that acts as a web of plate reinforcement) formed between the legs of the reinforcement plates 120 facing each other by the pressing force of the reinforcement plates 120. In this case, since the non-foaming polymer concentrate fills the space with an amount greater than the volume actually occupied by the core layer 140, the excess amount may be pushed out and discharged, and air bubbles can also be removed through this process.

The non-foaming polymer concentrate evenly filling the portion between the upper plate 110 and the reinforcement plate 120 is cured over time to form the core layer 140, and the manufacturing of the lightweight structural member 100 according to the present disclosure is completed due to the formation of the core layer 140.

The first and second manufacturing methods described above are methods of pouring the non-foaming polymer concentrate into an open space to perform the filling, rather than injecting the non-foaming polymer concentrate into a sealed space. These methods have the advantage of being able to form a thin-thickness plate reinforcing structure by overcoming the frictional resistance that occurs when injecting the non-foaming polymer concentrate through pressurization, and also being able to work while visually confirming whether the non-foaming polymer concentrate properly fills the entire structure corresponding to the core layer 140.

### (3) Third Manufacturing Method

Referring to FIG. 14, a third manufacturing method of the lightweight structural member 100 according to the present disclosure is a method of forming a sealed space between the upper plate 110 and the reinforcement plate 120 and injecting a non-foaming polymer concentrate into the sealed space, but the injection tube for injecting the non-foaming polymer concentrate is divided into several small tubes instead of one.

Normally, in the non-foaming polymer, a chemical reaction occurs while two liquids of organic compounds such as ISO and polyol are mixed, and curing begins from this point on. Since the chemical reaction only takes a few minutes, the injection of the non-foaming polymer concentrate must also be completed within a few minutes. In addition, since the non-foaming polymer concentrate itself is viscous, it may be difficult to spread the non-foaming polymer concentrate evenly within a few minutes.

The present manufacturing method is intended to solve the above-mentioned process difficulties by dividing the injection tube for injecting the non-foaming polymer concentrate into several small tubes and arranging the small tubes closely within the space where the core layer 140 is to be formed, thereby enabling the non-foaming polymer concentrate to be injected quickly and evenly within the sealed space between the upper plate 110 and the reinforcement plate 120.

When applying the present manufacturing method, when there is an unblocked portion between the plates, a temporary dam may be used to form a sealed space, and when it is finished with a separate finishing material, the finishing material may play a role in sealing the relevant portion. This can be applied to other manufacturing methods as well.

### (4) Fourth Manufacturing Method

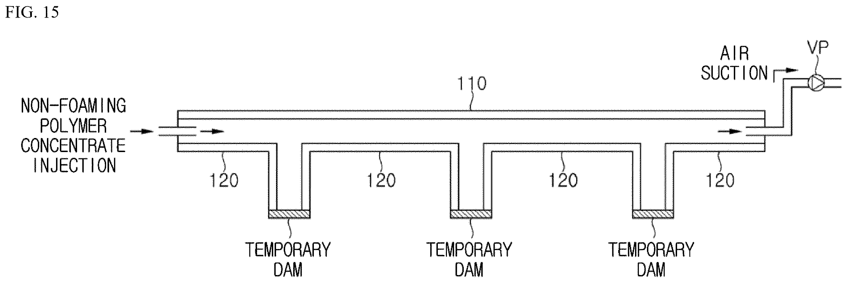

Referring to FIG. 15, a fourth manufacturing method of the lightweight structural member 100 according to the present disclosure is a method of forming a sealed space between the upper plate 110 and the reinforcement plate 120 and injecting the non-foaming polymer concentrate into the sealed space and performing the injection while removing air from the sealed space using a vacuum pump (VP).

More specifically, the sealed space is formed between the upper plate 110 and the reinforcement plate 120, and then the non-foaming polymer concentrate is injected through an injection tube on one side, while a vacuum pump (VP) is used on the other side to suck air within the sealed space.

According to the present manufacturing method, not only is it possible to inject the non-foaming polymer concentrate in a thin thickness while overcoming a frictional resistance due to the pressure difference between the inside and outside of the sealed space, but there is also an advantage in that rapid injection is possible due to the suction power of a vacuum pump (VP).

### (5) Fifth Manufacturing Method

The upper plate 110 and reinforcement plate 120 used in the manufacturing of the lightweight structural member 100 according to the present disclosure use metal plates that are much thinner than steel plates used for general ships. Therefore, there is a construction-related inconvenience due to this, namely, that since the thickness of the metal plate is too thin, it is difficult to maintain the shape of the plate and manage the flatness before or during the process of filling the core (non-foaming polymer).

Conventionally, a spacer is used to maintain the shape (or maintain the gap) in the process of filling the core between two plates. In addition, when the non-foaming polymer is used as the core, it has the characteristic of swelling slightly during the curing process, so the upper plate is pressed with a considerable load. However, in the case where the thickness of the metal plate forming the upper plate 110 and the reinforcement plate 120 is formed very thinly below a certain level as in the present disclosure, it is difficult to maintain the shape and flatness of the plate using the conventional method described above.

In addition, a sagging phenomenon of the plate due to the weight of the upper plate also occurs. In this case, when the core is formed thick enough, the strength of the chemical reaction is also strong, so the sagging upper plate can be pushed up again using the swelling force. However, in the case where the core layer 140 is formed thinly as in the present disclosure, the swelling force is weak, so it is insufficient to restore the sagging of the upper plate 110 due to its own weight.

In addition, the lightweight structural member 100 according to the present disclosure includes a structure in which the reinforcement plate 120 is bent downward. In this case, it is also very difficult to maintain a constant bending angle due to the characteristics of the reinforcement plate 120 being composed of a thin plate.

A fifth manufacturing method of the lightweight structural member 100 according to the present disclosure is proposed to solve the above-mentioned difficulties in the manufacturing method. While the first to fourth manufacturing methods described above are methods related to filling of the non-foaming polymer, the fifth manufacturing method can be viewed as a method related to maintaining the overall shape and flatness of the structural material before and during the injection of the non-foaming polymer.

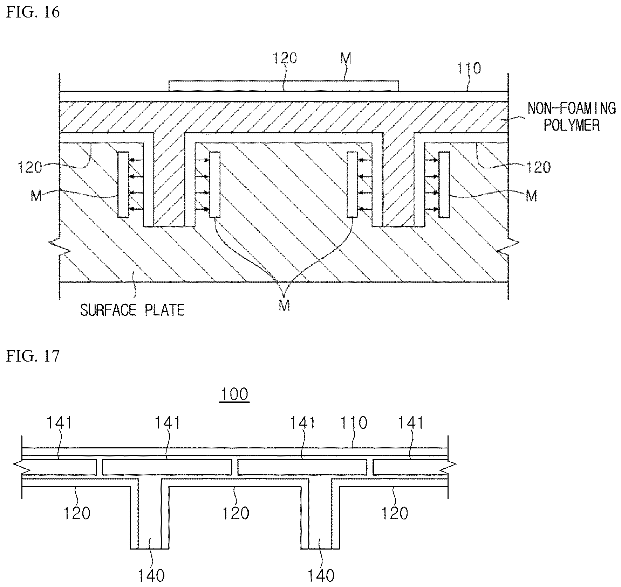

Specifically, as illustrated in FIG. 16, when a magnet M is disposed on the upper surface of the upper plate 110 disposed on the upper side in a state where the space between the upper plate 110 and the reinforcement plate 120 is filled with the non-foaming polymer concentrate, the upper surface of the upper plate 110 can be kept in a flat state by closely contacting the magnet M due to the magnetic field generated by the magnet M.

For reference, in the exemplary embodiment illustrated in FIG. 16, since the process is performed in a state where the reinforcement plate 120 and the upper plate 110 are sequentially stacked on a surface plate, the magnet M is disposed on the upper surface of the upper plate 110. Meanwhile, when the process is performed by flipping over the upper plate 110 and the reinforcement plate 120, the magnet M may be disposed on the upper surface of the reinforcement plate 120 located on the upper side based on the non-foaming polymer concentrate.

Here, the magnet M can be understood as a concept that includes all magnetic substances that may generate a force that attracts metals, including electromagnets. The magnet M does not need to be composed of a size corresponding to the entire area of the plate where flatness is to be maintained, and even when the magnet is disposed while occupying only a portion of the area, the effect of the entire plate becoming flat may be realized. In addition, a plurality of magnets M may be disposed on the plate, and when only one magnet M is used, it is preferable that the magnet is disposed in the center of the plate.

In addition, by disposing the magnet M on the side surface of the reinforcement plate 120 that is erected vertically as well as horizontally, in the same principle, the flatness may be maintained and the desired bending angle may be obtained.

In this case, the magnet M may be configured to be included in a working jig or surface plate that fixes the positions of the upper plate 110 and the reinforcement plate 120. Although the drawing illustrates that only the magnet M that applies a tensile force to the reinforcement plate 120 is included in the surface plate, it is obvious that the magnet M that applies a tensile force to the upper plate 110 may also be included in the working jig or the surface plate. In this case, even when a separate gripping portion is not provided to fix the upper plate 110 or the reinforcement plate 120 to the working jig or surface plate, the additional effect of easily gripping the upper plate 110 or the reinforcement plate 120 made of a metal plate by the pulling force of the magnet may be obtained.

In addition, the present manufacturing method may be implemented using a vacuum suction device instead of the magnet M. Specifically, by suctioning a specific portion of the plate where the flatness should be maintained with a vacuum suction device and applying the tensile force to the specific portion, the shape of the structural material may be maintained and the flatness may be maintained.

As in the case of applying a magnet M, the vacuum suction device may perform the flatness maintenance function by providing suction force only for a part of the plate, not the entire plate area, and it is preferable to suction the central portion of the plate where the flatness is to be maintained. In addition, it is also possible to apply a plurality of vacuum suction devices on one plate.

The lightweight structural member 100 according to the present disclosure, which is manufactured by applying the fifth manufacturing method as described above, may have a flat surface and maintain the same thickness overall, thereby realizing uniform structural performance. In addition, since the problem of the flatness is solved during the manufacturing process, the number of spacers arranged between the upper plate 110 and the reinforcement plate 120 may be greatly reduced, thereby achieving the effect of reducing manufacturing labor-hours and costs.

According to the thickness and end treatment method of forming the structure of the lightweight structural member 100 according to the present disclosure, two or more of the first to fifth manufacturing methods described above may be applied in parallel. For example, while performing the second manufacturing method in a sealed space rather than an open cavity, it is possible to remove air in the sealed space using the vacuum pump of the fourth manufacturing method, and also, like the third manufacturing method, while performing injection of the non-foaming polymer concentrate using multiple injection tubes, it is also possible to apply the vacuum pump of the fourth manufacturing method together. In the case of the fifth manufacturing method, since it is a method applied to maintain the shape and flatness of the structural material, it can be said that it can be used in parallel with any other manufacturing method.

In addition, thin non-foaming polymers take longer to cure than thick non-foaming polymers because the absolute capacity for chemical reaction is smaller. In particular, in periods of low temperature such as winter, the rate of chemical reaction between molecules for curing also decreases, so the curing time takes longer or, in extreme cases, curing does not occur. To prevent this, a heating wire or heating pipe facility that can raise the temperature on the surface of the manufacturing jig may be installed, and this can be commonly applied to all manufacturing methods.

### IV. Additional Exemplary Embodiment of Lightweight Structural Member

Meanwhile, when configuring the core layer 140 of the lightweight structural member 100 according to the present disclosure, it is also possible to additionally use a high-performance insulating material that already has insulation and structural performance. In this case, since a high-performance insulating material with low thermal conductivity is additionally disposed between the upper plate 110 and the reinforcement plate 120, excellent performance in terms of insulation may be achieved.

More specifically, as illustrated in FIG. 17, a core layer 140 may be formed by placing a high-performance insulating material 141 having a thermal conductivity of lower than 0.02 W/mK together with the non-foaming polymer between the upper plate 110 and the reinforcement plate 120. For example, when the core layer 140 is formed to include a vacuum insulating panel (VIP) having a thermal conductivity of 0.004 W/mK, the overall thickness of the lightweight structural member 100 increases to 20 to 40 mm, but in terms of insulation, it is possible to achieve insulation performance that is about 6 to 10 times better than that of a general expanded polystyrene (EPS) insulation material. In addition, since the structural strength increases in proportion to the 2 to 3 power of the thickness increase due to the characteristics of the composite material, it is possible to realize lightweight but superior structural performance.

In addition, when the vacuum insulation panel is included within the non-foaming polymer, the vacuum insulation panel may be more effectively protected from an external impact, and the gas inflow and outflow into the vacuum insulation panel is completely blocked by the airtight structure of the non-foaming polymer, so that the lifespan of the vacuum insulation panel may be extended almost permanently.

In the case where the core layer 140 is composed only of the non-foaming polymer, there is an advantage in that the thickness of the lightweight structural member 100 can be optimized and manufactured to a very thin thickness, and in the case where a high-performance insulating material 141 such as the vacuum insulation panel is additionally included together with the non-foaming polymer, the lightweight structural member 100 is manufactured more easily (since the non-foaming polymer concentrate may be applied to the surface of the high-performance insulating material 141 and used as an adhesive) and excellent insulating performance may be obtained. Therefore, when forming the core layer 140 of the lightweight structural member 100 according to the present disclosure, whether to use the non-foaming polymer alone or in combination with the high-performance insulating material 141 may be selected and applied by considering the advantages of each method.

For reference, when the core layer 140 is composed of only the high-performance insulating material 141, the coupling force with the upper plate 110 and the reinforcement plate 120 is weak, making it difficult to secure sufficient structural performance. Therefore, the lightweight structural member 100 of the present disclosure may obtain satisfactory structural performance only when the non-foaming polymer surrounding the high-performance insulating material 141 is firmly fixed by adhesion between the upper plate 110 and the reinforcement plate 120.

### V. Application Example of Lightweight Structural Member

The lightweight structural member 100 according to the present disclosure may be utilized to form the floor, ceiling, and wall structures of a ship structure or a building. Preferably, the lightweight structural member 100 according to the present disclosure may be utilized as a deck structure of a ship. In addition, the lightweight structural member 100 according to the present disclosure may be installed on the upper or lower part of the concrete slab that divides the upper and lower levels in a building and utilized as a floor or ceiling structure, and may also be applied to the wall structure of a building as needed. Hereinafter, specific application examples of the lightweight structural member 100 according to the present disclosure and the resulting operational effects will be described.

### (1) Ship Structure

The lightweight structural member 100 according to the present disclosure may be applied to constructing the deck of a ship or the floor structure of a ship accommodation. In particular, the lightweight structural member 100 according to the present disclosure is expected to have excellent usability in the shipbuilding industry, especially when applied to the manufacturing of a car deck of a pure car carrier (PCC) and is also effective in forming the floor structure of a ship accommodation.

When the lightweight structural member 100 according to the present disclosure is used as a ship structural material, the effect of solving the thermal deformation problem of the existing welding may be achieved.

Conventionally, general steel plate structural members of the type illustrated in FIG. 1 are mainly used to construct the deck of a ship, and in this case, as described above, it is unavoidable that serious thermal deformation occurs because the plate reinforcement 20 is welded under the upper plate 10 that serves as the structural member. In addition, considering only the structural performance as a general ship deck, the upper plate 10 of the steel plate structural member should be formed to a thickness of approximately 6 mm, but considering the thermal deformation due to the welding of the plate reinforcement 20, the thickness of the upper plate 10 is often increased to approximately 10 mm from the beginning and manufactured. However, even when the thickness of the upper plate 10 is increased, the problem of the thermal deformation due to the welding of the plate reinforcement 20 still exists, and therefore, in most cases, a considerable amount of time is invested in corrective work through heat processing after the welding of the plate reinforcement 20.

However, since the lightweight structural member 100 according to the present disclosure has the protrusion that functions as the plate reinforcement already included in the structure and does not require welding for attachment of the plate reinforcement, the amount of welding required for the entire process and the resulting thermal deformation may be greatly reduced, and thus, it is possible to fundamentally solve the problem of the thermal deformation resulting from welding of steel plate structural members, which are still mainly used in the shipbuilding industry.

In addition, in the present disclosure, when connecting the adjacent lightweight structural members 100, since the finishing members made of metal are welded to each other or lightweight structural members 100 whose rigidity is already secured by the core layer 140 formed therein are welded to each other, it is possible to greatly reduce the amount of thermal deformation of the entire plate.

In addition, the lightweight structural member 100 according to the present disclosure, which is composed of the composite material, can achieve the equivalent structural performance with a weight that is about 40 to 50% lighter than that of the conventional steel plate, and thus may greatly contribute to reducing the weight of a ship.

### (2) Building Structure

The lightweight structural member 100 according to the present disclosure has a thermal conductivity of 0.2 to 0.4 W/mK, similar to high-density wood, since the space between the upper plate 110 and the reinforcement plate 120 is mostly filled with the non-foaming polymer. This means that it has incomparably superior insulation performance compared to a general steel plate structural member (k = 83W/mK) mainly used for ships and has superior insulation performance compared to the reinforced concrete (k = 1.6W/mK) used for construction. In addition, the lightweight structural member 100 according to the present disclosure, which has excellent performance in terms of vibration/noise reduction due to the role of the elastic non-foaming polymer, can be sufficiently used not only as the structural material for ships but also as a floor or wall structure for land.

Representatively, both ends in the longitudinal direction of the lightweight structural member 100 according to the present disclosure may be structurally connected to a wall to form a floor or ceiling structure of a building. Hereinafter, exemplary embodiments of utilizing the lightweight structural member 100 according to the present disclosure as a floor structure and a ceiling structure of a building will be sequentially described.

### A. Floor Structure of Building (Double Floor)

The lightweight structural member 100 according to the present disclosure may be used in the floor structure of a building, and in particular, since the lightweight structural member can be manufactured as a long-span structure, the lightweight structural member may be very usefully utilized in forming a double floor structure of a building.

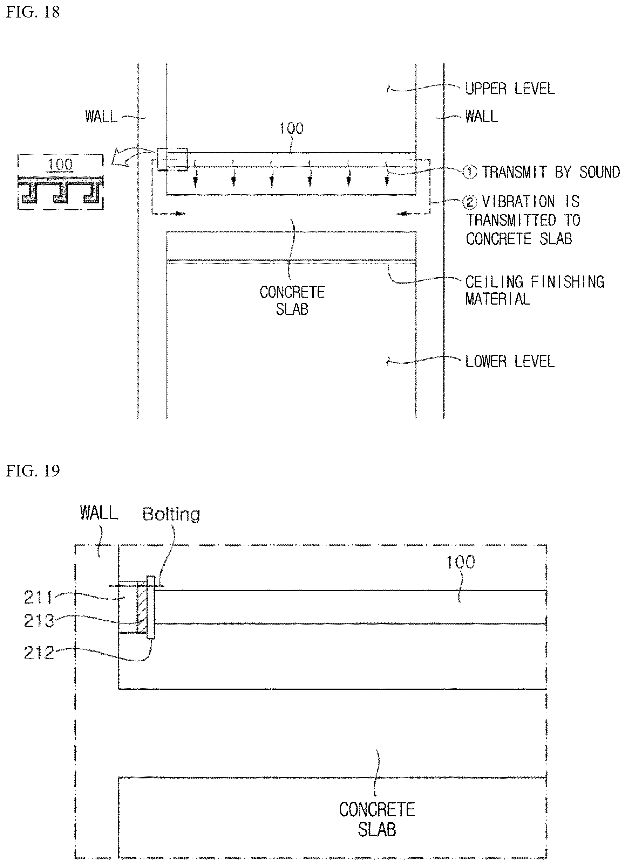

Referring to FIG. 18, the lightweight structural member 100 according to the present disclosure may be fixed to the wall of the building on the upper level at both ends along the longitudinal direction, and in this case, the lightweight structural member may be disposed with a slight gap on the upper side of the concrete slab forming the floor of the upper level, so that a double floor structure may be implemented.

In general, in a multi-story building such as an apartment, a house, an studio apartment, or a building, the portion between the upper and lower levels is divided by a concrete slab, and the concrete slab is used as the floor on the upper level and as the ceiling on the lower level. In other words, a general multi-story building is a structure in which the floor structure of the upper level forms the ceiling structure of the lower level, and since one concrete slab is shared between two floors, it is fundamentally vulnerable to noise transmission through this.

The most widely used method to solve this problem of inter-floor noise is the double floor structure. The conventional double floor structure, which is generally known, is a structure in which an additional lightweight floor is installed on a concrete slab, that is, two floors are formed and an air layer is disposed between them to block sound transmission.

However, this conventional double floor structure requires the installation of tens to hundreds of supports to support between the lightweight floor and the concrete slab because the structural strength of the lightweight floor is not as strong as that of the concrete floor, and therefore, the transmission of noise/vibration through the numerous supports cannot be ignored. In addition, there are also problems such as increased installation labor-hours and costs due to the requirement for the installation of a large number of supports.

However, since the lightweight structural member 100 according to the present disclosure can be manufactured as a long-span structure, sufficient structural performance may be secured simply by fixing both ends along the longitudinal direction to the building wall, and thus, a sturdy and perfect double floor structure may be implemented without a separate lower support structure.

That is, when a double floor structure is implemented by forming an upper bottom with a lightweight structural member 100 according to the present disclosure, there is no need to install a separate support for supporting the lightweight structural member 100 on the concrete slab, and therefore, the upper bottom and the concrete slab are structurally completely separated, enabling the implementation of a double floor structure that is very effective in reducing inter-floor noise.

With continued reference to FIG. 18, the effect of reducing inter-floor noise by applying the lightweight structural member 100 according to the present disclosure will be described in more detail.

Generally, the inter-floor noise may be divided into two types: first, weight or friction impact sound generated on the upper level is transmitted through the floor structure, and second, weight or friction impact sound is transmitted from the upper level through the wall. Meanwhile, in the double floor structure implemented using the lightweight structural member 100 according to the present disclosure, the impact sound generated from the side of the lightweight structural member 100 constituting the upper floor on the upper level is converted into sound and transmitted to the concrete slab on the lower side. In other words, since the impact sound is transmitted as sound energy rather than directly through vibration transmission, the total amount of energy transmitted to the lower level may be significantly reduced.

In addition, since the vibration transmitted through the wall from the lightweight structural member 100 constituting the upper floor on the upper level is not directly transmitted to the ceiling finishing material on the lower level but is first transmitted to the concrete slab, the amount of vibration and sound energy applied to the ceiling finishing material on the lower level may be significantly reduced.

In addition, the present disclosure proposes several buffer structures that may alleviate the impact when connecting the lightweight structural member 100 and the wall, so as to more effectively block noise transmission from the lightweight structural member 100 through the wall and thereby maximize the effect of reducing inter-floor noise.

Hereinafter, with reference to FIGS. 19 to 22, connection structures that can be applied between the lightweight structural member 100 and the wall according to the present disclosure will be described.

First, a first wall connection structure will be described with reference to FIG. 19. In the first wall connection structure, an anchor pad 211 is installed on the building wall, and a metal plate 212 for fastening to the anchor pad 211 is fixed by welding to both ends along the longitudinal direction of the lightweight structural member 100. The anchor pad 211 and the metal plate 212 are fixed and connected to each other through bolting connection, and in this case, a vibration-reducing buffering material may be disposed between the anchor pad 211 and the metal plate 212 to alleviate the impact transmitted from the lightweight structural member 100 to the wall.

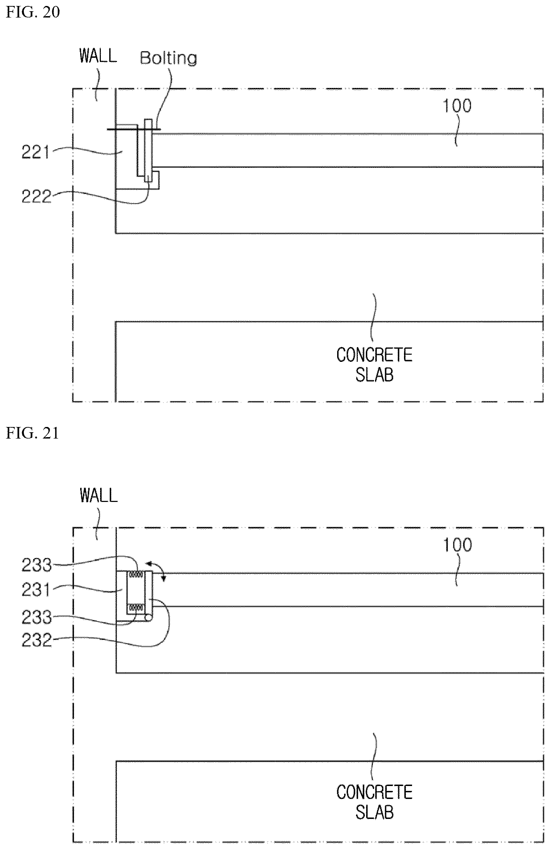

Next, a second wall connection structure will be described with reference to FIG. 20. In the second wall connection structure, the lower portion of an anchor pad 221 installed on a building wall is provided in the form of an L-shaped angle (or an L-shaped angle member is joined to the lower end of the anchor pad 221), and the lower end portion of a metal plate 222 is inserted into a space formed by a lower L-shaped angle of the anchor pad 221 so as to be supported while preventing horizontal separation. The upper end portion of the metal plate 222 may be fixed to the anchor pad 221 or the wall through a bolting connection.

In addition, for the purpose of alleviating the shock transmitted from the lightweight structural member 100 to the wall, a vibration-reducing buffering material or spring may be additionally disposed between the metal plate 222 and the anchor pad 221.

The second wall connection structure is a method in which the lower end portion of the metal plate 222 is received and supported in a form that is simply inserted into the space without being mechanically fastened by a separate member, and only the upper end portion is fastened by bolting. Therefore, since the metal plate 222 is disposed on the anchor pad 221 including an L-shaped angle and only the upper end portion is fixed to the wall, a structurally strong connection is possible while being very easy to work on site.

Next, a third wall connection structure will be described with reference to FIG. 21. In the third wall connection structure, an anchor pad 231 installed on a building wall and a metal plate 232 welded and fixed to an end along the longitudinal direction of the lightweight structural member 100 are connected in a hinge manner so that the metal plate 232 can rotate around the hinge axis, and an elastic spring 233 is arranged between the anchor pad 231 and the metal plate 232 so as to alleviate impact transmitted from the lightweight structural member 100 to the wall.

In the third wall connection structure, it is also possible to place a vibration-reducing buffering material between the anchor pad 231 and the metal plate 232 instead of the spring 233, or to place the vibration-reducing buffering material together with the spring 233.

While the second wall connection structure illustrated in FIG. 20 is a structure that does not restrain the lower end portion of the metal plate 222 and allows a slight movement within a certain range, the third wall connection structure illustrated in FIG. 21 can be understood as a structure that restrains the lower end portion of the metal plate 232 but allows the entire plate to move flexibly against vibration through a hinge connection.

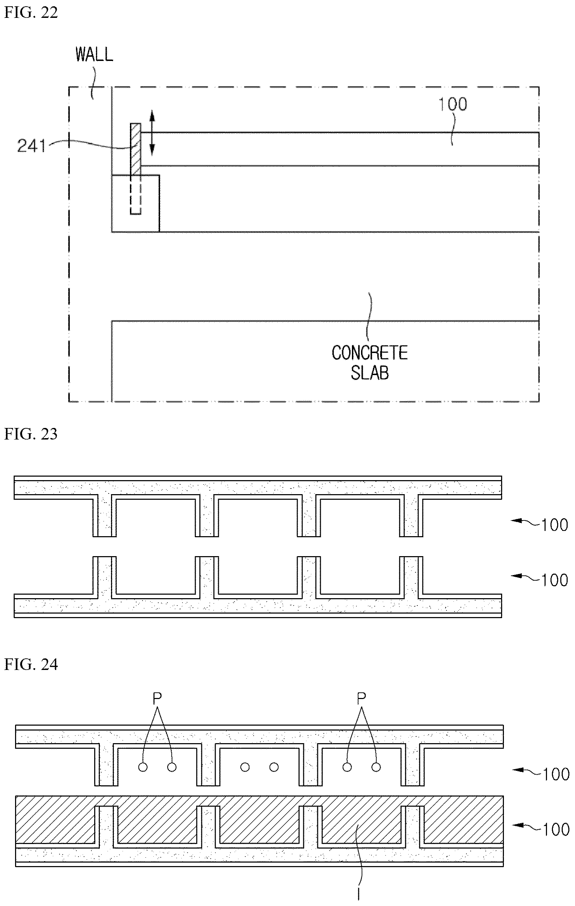

Lastly, in a fourth wall connection structure illustrated in FIG. 22, the lightweight structural member 100 is not directly connected to the building wall and is connected to the building wall through a vibration reduction device 241. Here, the vibration reduction device 241 may be a hydraulic device or spring device capable of absorbing vibration in the vertical direction.

When the fourth wall connection structure is applied, vibration caused by impact from the lightweight structural member 100 is not transmitted to the wall. In addition, since vibration transmitted from the lightweight structural member 100 to the concrete slab may be absorbed by the vibration reduction device 241, impact transmitted in the vertical direction may also be effectively alleviated.

In addition, although not illustrated in the drawing, in addition to the first to fourth wall connection structures described above, various buffering materials are disposed in the space between the lightweight structural member 100 and the concrete slab to implement an additional damping effect, thereby enabling additional reduction of inter-floor noise.

### B. Ceiling Structure of Building

Although not illustrated separately, it is also possible to install the lightweight structural member 100 according to the present disclosure under a concrete slab and use the lightweight structural member 100 as a ceiling structure of the lower level.

In this case, the ceiling finishing material of the lower level may be directly attached to the lower surface of the lightweight structural member 100, so that separate support construction and carpentry work for attaching the ceiling finishing material is not required, and thus the ceiling construction may be simplified.

In addition, since various pipes and decorative items (for example, ceiling-type air conditioners) to be installed on the ceiling can be easily attached to the lightweight structural member 100 according to the present disclosure, application of the modular construction method is also possible through prior decoration.

### C. Use as Overlapping Structure

As illustrated in FIG. 23, it is also possible to utilize the lightweight structural members 100 according to the present disclosure by overlapping the lightweight structural members vertically.

In this way, when two lightweight structural members 100 are disposed over each other, there is an advantage in that various additional functions may be easily added by first installing various decorative items in the space where the upper and lower lightweight structural members 100 face each other.

For example, referring to FIG. 24, an ondol function may be easily added by installing an insulation material I and a heating/cooling pipe P in the space between lightweight structural members 100 that are overlapped vertically. Here, the insulation material I may be disposed only on the lower side of the heating/cooling pipe P so that the cooling or heating by a thermal fluid flowing through the heating/cooling pipe P can be well transferred upward, and the surrounding of the heating/cooling pipe P may be left as an empty space.

Generally, the ondol floor leveling construction requires a process of laying an insulation material on a concrete slab, installing a hot water pipe on the insulation material, and then applying finishing mortar on the hot water pipe. In order to achieve even flatness during the mortar construction, mortar with a high moisture content should be used, so the mortar takes a long time to be cured and the work is very cumbersome.

However, when applying the present disclosure, since the lightweight structural member 100 disposed on the upper side performs a structural function, separate mortar construction is not required, and thus, an ondol structure and/or a floor heating and cooling structure may be constructed very conveniently and simply.

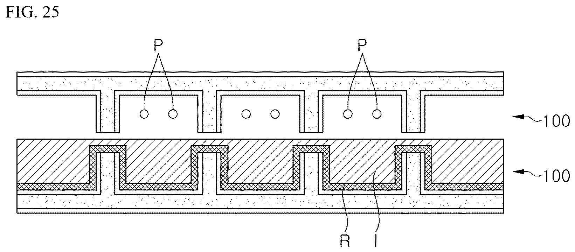

In addition, referring to FIG. 25, by adding a fireproof material R between the lightweight structural member 100 disposed on the lower side and the insulation material I, it is also possible to realize fire resistance performance of the floor without a separate fireproof covering.

According to domestic and international floor fire resistance standards, the temperature rise of the non-heated surface of the structural material is important, but structural stability against fire is also considered equally important. More specifically, structural stability is evaluated by exposing the lower portion of the structural material to a heat source in a state where a weight (for example, 3 kN/m²) equal to or more than a certain load is disposed on the structural material, and checking the deflection amount of the structure after a certain period of time (for example, 2 hours).

In the case of the conventional building structural member generally made of metal, when the building structural member is exposed to heat during the fire resistance test process and the temperature thereof is equal to or more than a certain temperature, structural performance thereof is lost. Therefore, additional follow-up work is performed to cover the portion below the metal with a fireproof material to meet fire resistance standards.

However, as illustrated in FIG. 25, in a case where the fireproof material R is disposed in advance inside an overlapping structure according to overlapping arrangement of the lightweight structural members 100, even when the lightweight structural member 100 disposed on the lower side loses the structural performance due to exposure to a heat source caused by a fire, the upper lightweight structural member 100 protected by the fireproof material R may maintain the structural performance. Therefore, even when additional fireproof covering work is not performed unlike the related art, structural stability may be maintained in a fire situation, and the aforementioned fire resistance standard may be easily satisfied.

In the overlapping of the lightweight structural members 100 according to the present disclosure, when an additional function is to be provided to the space therebetween, or when a double floor structure is to be included in the structure itself to double the effect of reducing inter-floor noise, the lightweight structural members 100 facing each other vertically may be arranged with a predetermined gap. In addition, since each lightweight structural member 100 forming the overlapping structure will be individually fixed within the structure, the lightweight structural members 100 arranged vertically do not necessarily need to be structurally directly connected.

When the lightweight structural member 100 according to the present disclosure is used as a floor structure of a building by doubly overlapping the lightweight structural members 100, the impact noise that is a direct cause of inter-floor noise is generated from the lightweight structural member 100 disposed on the upper side. Therefore, the upper lightweight structural member 100 is connected to the building wall so as to enable cushioning by applying the first to fourth wall connection structures described above, and the lightweight structural member 100 disposed on the lower side may be connected to the wall through simple mechanical fastening such as bolting connection.

When the lightweight structural member 100 according to the present disclosure is used as a building structural member, the following effects can be expected.

First, it is possible to implement an ultra-light long-span dry structure with superior structural performance, and it is possible to greatly increase the efficiency of the overall construction project when using the ultra-light long-span dry structure.

During construction, reinforced concrete floor construction is the most cumbersome and time-consuming basic skeleton construction in the entire construction. In particular, it is considered the most important construction in terms of construction management and performance implementation because the concrete floor is installed using wet construction methods that are greatly affected by the environment and have poor on-site conditions. Recently, there has been a case where a major accident occurred due to the forced construction of wet concrete slab to shorten the construction period.

The lightweight structural member 100 presented in the present disclosure weighs only about 30 to 40% of general concrete, but the lightweight structural member can implement a long-span structure that is much longer than the existing reinforced concrete floor structure, and above all, since the construction can be done using a dry method, it is hardly affected by the environment, and has the advantage of being able to drastically reduce cumbersome and poor on-site processes. In addition, unlike the wet method, since structural performance is implemented immediately after installation, the overall construction period may be significantly shortened.

In addition, by using the lightweight structural member 100 according to the present disclosure, it is possible to implement a sturdy double floor structure that does not require a support, and thus, the problem of inter-floor noise, which has become a major social issue, may be reduced very dramatically.

In addition, when the lightweight structural member 100 according to the present disclosure is used as the floor structure of a building, the ondol floor leveling construction may be simplified. As described above, the lightweight structural member 100 according to the present disclosure has significantly superior structural performance, so there is no need to construct the ondol construction (heating construction) on the lightweight floor to increase structural strength, like the case of the existing double floor structure. Therefore, when the lightweight structural member 100 according to the present disclosure is installed on the existing concrete slab, the work for hot water pipes or heating/cooling pipes required for the ondol construction may be conveniently performed on the existing concrete, and there is no need to perform separate floor leveling mortar work.

Since hot water pipes are placed after constructing the insulation material on the concrete slab in the conventional ondol floor leveling construction, in order to form a flat floor that can be walked on, floor mortar work should be performed or separate dry ondol panels should be additionally installed before the finishing flooring can be constructed. However, since the lightweight structural member 100 according to the present disclosure functions as a sufficient structural material in itself, the separate floor mortar work or dry ondol panel installation work performed in the related art is not necessary, and since the finishing flooring can be constructed directly on the lightweight structural member 100, the ondol floor leveling construction may be made much simpler.

Step construction may also be simplified. Generally, the floor of a bathroom or an entrance is designed to have a step that is about tens of millimeters (mm) lower than other floor slabs, and in conventional construction methods, separate formwork or floor leveling work is required to form such a step. However, according to the present disclosure, since all floor slabs on the same floor are manufactured flat and the step construction is only performed on the lightweight structural member 100, the step construction is simplified, and the manufacturing of the step structure for the floor slab of a bathroom or an entrance becomes very convenient.

In addition, when the lightweight structural member 100 according to the present disclosure is used as a ceiling structure of a building, the ceiling finishing material of the lower level can be directly attached to the lower surface of the lightweight structural member 100, thereby simplifying the ceiling construction, and application of the modular construction method is also possible by pre-installation of attaching various pipes and decorative items to be installed on the ceiling to the lightweight structural member 100 in advance.

In addition, when the lightweight structural members 100 according to the present disclosure are used as the overlapping structure by overlapping the lightweight structural members vertically, there is an advantage in that the pre-installation of attaching various pipes or ceiling attachments, and the like to the inside or the lower side of the structure is possible.

For example, by easily installing the insulation material I and heating/cooling pipe P required for underfloor heating inside the structure through the pre-installation (refer to FIG. 24), separate ondol floor leveling construction may be omitted, and thus the overall construction process may be greatly simplified. In addition, the response of the floor temperature to temperature control may be accelerated, and since the structure that needs to be heated is much lighter and simpler, it is also much more advantageous in terms of heat efficiency. In addition, when the fireproof material R is additionally installed within the structure as pre-installation (refer to FIG. 25), there is an advantage in that its own fireproofing performance may be sufficiently implemented without a separate subsequent fireproofing process.

The present disclosure is not limited to the described exemplary embodiments, and it is obvious to those skilled in the art that various modifications and variations can be made without departing from the spirit and scope of the present disclosure. Accordingly, such modifications or variations should fall within the scope of the claims of the present disclosure.

## Claims

1. A composite material-based lightweight structural member having an integrated plate reinforcement, comprising:
a flat metallic upper plate;
a plurality of metal reinforcement plates including a horizontal plate formed in a horizontal direction and a vertical plate bent downward from the horizontal plate and arranged at a predetermined interval below the upper plate; and
a non-metallic core layer formed in a space between the upper plate and the reinforcement plate and a space between the adjacent reinforcement plates,
wherein the vertical plates formed in a plurality are formed in such a way that they are close to each other and face each other to form a pair, and a pair of vertical plates and a core layer formed therebetween form a protrusion that functions as a plate reinforcement, and
the protrusions are formed at a regular interval along the horizontal direction and extend while maintaining a constant cross-sectional shape along a longitudinal direction.

2. The composite material-based lightweight structural member having an integrated plate reinforcement of claim 1, wherein the core layer is formed of a non-foaming polymer.

3. The composite material-based lightweight structural member having an integrated plate reinforcement of claim 1, wherein the horizontal plate and the vertical plate constituting the reinforcement plate are formed by bending a single plate.

4. The composite material-based lightweight structural member having an integrated plate reinforcement of claim 1, wherein a lower end of the protrusion is re-bent or a separate metal finishing member is coupled to the lower end of the protrusion, so that the lower end of the protrusion has an "L"-shaped cross-section or a "⊥"-shaped cross-section, and
a vertical reinforcing portion formed vertically from the protrusion performs a function of a web of the plate reinforcement, and a vertical reinforcing portion formed horizontally from the protrusion performs a function of a flange of the plate reinforcement.

5. The composite material-based lightweight structural member having an integrated plate reinforcement of claim 1, wherein each of remaining reinforcement plates, excluding the reinforcement plates arranged at at least both ends along a width direction among the plurality of reinforcement plates, has a "□"-shaped cross-section,
the composite material-based lightweight structural member further includes a lower plate arranged at a predetermined interval below the reinforcement plates,
the core layer is additionally formed between the reinforcement plate and the lower plate, and
an overall structure of the composite material-based lightweight structural member is manufactured to include a ladder shape.

6. The composite material-based lightweight structural member having an integrated plate reinforcement of claim 2, wherein a high-performance insulating material having a thermal conductivity of 0.02 W/mK or less is additionally disposed inside the core layer.

7. The composite material-based lightweight structural member having an integrated plate reinforcement of claim 3, wherein the high-performance insulating material is a vacuum insulation panel (VIP).

8. The composite material-based lightweight structural member having an integrated plate reinforcement of claim 1, further comprising a side end finishing member that finishes both ends of the upper plate and the reinforcement plate,
wherein the side end finishing member is inserted between the upper plate and the reinforcement plate, and is pushed by a predetermined distance from the ends of the upper plate and the reinforcement plate.

9. The composite material-based lightweight structural member having an integrated plate reinforcement of claim 8, wherein when the adjacent lightweight structural members are connected to each other, the upper plates facing each other and the lower plates facing each other are joined by welding, and a non-foaming polymer concentrate is injected into a space formed between the upper plate, the lower plate, and the side end finishing member and cured to airtightly finish a connection area.

10. The composite material-based lightweight structural member having an integrated plate reinforcement of claim 1, further comprising a side end finishing member that finishes both ends of the upper plate and the reinforcement plate,
wherein the side end finishing member is provided in a straight line shape or an angle shape having a cross-section of a " 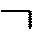 " shape, one end of the side end finishing member is inserted between the upper plate and the reinforcement plate, and the other end of the side end finishing member protrudes outward from the upper plate and the reinforcement plate.

11. The composite material-based lightweight structural member having an integrated plate reinforcement of claim 10, wherein when the adjacent lightweight structural members are connected to each other, the facing side end finishing members are structurally coupled to each other through welding or bolting.

12. A ship deck structure manufactured using the lightweight structural member according to any one of claims 1 to 11.

13. The ship deck structure according to claim 12, wherein the ship is a pure car carrier (PCC).

14. A method for manufacturing a composite material-based lightweight structural member having an integrated plate reinforcement, the light structural member including a flat metallic upper plate, a plurality of metal reinforcement plates arranged at a predetermined interval below the upper plate and including a horizontal plate formed in a horizontal direction and a vertical plate bent downward from the horizontal plate, and a core layer formed in a space between the upper plate and the reinforcement plate and a space between the adjacent reinforcement plates, the method comprising:
filling the space between the upper plate and the reinforcement plate and the space between the adjacent reinforcement plates with a non-foaming polymer concentrate;
curing the non-foaming polymer concentrate; and
completing formation of the core layer by the curing of the non-foaming polymer concentrate.

15. The method for manufacturing a composite material-based lightweight structural member having an integrated plate reinforcement of claim 14, wherein in the filling of the spaces with the non-foaming polymer concentrate, a space is formed on the upper plate, the non-foaming polymer concentrate is poured, the reinforcement plate is inserted from above in a state of being turned over to pressurize to a position at a predetermined distance from the upper plate, so that the non-foaming polymer concentrate evenly fills the space between the reinforcement plates by penetrating into the space while overcoming frictional resistance due to viscosity by a pressing force of the reinforcement plate.

16. The method for manufacturing a composite material-based lightweight structural member having an integrated plate reinforcement of claim 15, wherein an amount of the non-foaming polymer concentrate initially poured into the space on the upper plate is injected in an amount at least 2% more than an actual volume occupied by the core layer, and an excess amount is pushed out and discharged by the pressing force of the reinforcement plate.

17. The method for manufacturing a composite material-based lightweight structural member having an integrated plate reinforcement of claim 14, wherein in the filling of the spaces with the non-foaming polymer concentrate, a space where the core layer is to be formed is sealed, and the non-foaming polymer concentrate is injected into the sealed space using an injection tube, and the injection tube is divided into several small tubes and disposed in the sealed space.

18. The method for manufacturing a composite material-based lightweight structural member having an integrated plate reinforcement of claim 14, wherein in the filling of the spaces with the non-foaming polymer concentrate, a space where the core layer is to be formed is sealed, an injection tube is inserted into one side of the sealed space to inject the non-foaming polymer concentrate, and a vacuum pump is used on the other side of the sealed space to suck air within the sealed space.

19. The method for manufacturing a composite material-based lightweight structural member having an integrated plate reinforcement of claim 14, in at least one of the filling of the spaces with the non-foaming polymer concentrate and the curing of the non-foaming polymer concentrate, a magnet is disposed on at least one surface of the upper plate and the reinforcement plate or is sucked by a vacuum suction device to apply a tensile force to maintain flatness and maintain an accurate angle.

## Amended claims

### Amended claims under Art. 19.1 PCT

1. A composite material-based lightweight structural member having an integrated plate reinforcement, comprising:
a metallic first main plate;
a plurality of metal reinforcement plates including a first reinforcement plate formed in a direction parallel to the first main plate and a second reinforcement plate bent toward one side from the first reinforcement plate and arranged at a predetermined interval from one side of the first main plate; and
a non-metallic core layer formed in a space between the first main plate and the reinforcement plate and a space between the adjacent reinforcement plates,
wherein a protrusion structure formed by the adjacent second reinforcement plates and the core layer formed therebetween functions as a plate reinforcement.

2. The composite material-based lightweight structural member having an integrated plate reinforcement of claim 1, wherein the protrusion structures are formed at a predetermined interval along a width direction of the lightweight structural member and extend while maintaining a constant cross-sectional shape along a longitudinal direction.

3. The composite material-based lightweight structural member having an integrated plate reinforcement of claim 1, wherein the core layer is formed of a non-foaming polymer.

4. The composite material-based lightweight structural member having an integrated plate reinforcement of claim 1, wherein the first reinforcement plate and the second reinforcement plate are provided integrally, and
the second reinforcement plate is formed to be bent from the first reinforcement plate.

5. The composite material-based lightweight structural member having an integrated plate reinforcement of claim 1, wherein an end of the protrusion structure is re-bent or a separate finishing member is coupled to the end of the protrusion structure, and
a vertical reinforcing portion formed vertically from the protrusion structure constitutes a web of the plate reinforcement, and a horizontal reinforcing portion formed horizontally from the protrusion structure constitutes a flange of the plate reinforcement.

6. The composite material-based lightweight structural member having an integrated plate reinforcement of claim 1, wherein each of remaining reinforcement plates, excluding the reinforcement plates arranged at at least both ends along a width direction among the plurality of reinforcement plates, has a cross-section with a closed structure on all sides,
the composite material-based lightweight structural member further includes a second main plate arranged at a predetermined interval from one side of the reinforcement plates, and
the core layer is additionally formed between the reinforcement plate and the second main plate.

7. The composite material-based lightweight structural member having an integrated plate reinforcement of claim 3, wherein a high-performance insulating material having a thermal conductivity of 0.02 W/mK or less is additionally disposed inside the core layer.

8. The composite material-based lightweight structural member having an integrated plate reinforcement of claim 7, wherein the high-performance insulating material is a vacuum insulation panel (VIP).

9. The composite material-based lightweight structural member having an integrated plate reinforcement of claim 1, further comprising a side end finishing member that finishes an edge portion between the first main plate and the reinforcement plate.

10. The composite material-based lightweight structural member having an integrated plate reinforcement of claim 9, wherein the side end finishing member is inserted between the first main plate and the reinforcement plate, and is pushed by a predetermined distance from the ends of the first main plate and the reinforcement plate.

11. The composite material-based lightweight structural member having an integrated plate reinforcement of claim 10, wherein when the adjacent lightweight structural members are connected to each other, the first main plates facing each other are joined by welding and the reinforcement plates facing each other are joined by welding, and a non-foaming polymer concentrate is injected into a space formed between the first main plate, the reinforcement plate, and the side end finishing member and cured to airtightly finish a connection area.

12. The composite material-based lightweight structural member having an integrated plate reinforcement of claim 9, wherein the side end finishing member is provided in a straight line shape or an angle shape having a bent structure, one end of the side end finishing member is inserted between the first main plate and the reinforcement plate, and the other end of the side end finishing member protrudes outward from the first main plate and the reinforcement plate.

13. A method for manufacturing a composite material-based lightweight structural member having an integrated plate reinforcement, the light structural member including a metallic main plate, a plurality of metal reinforcement plates arranged at a predetermined interval from the main plate and including a first reinforcement plate formed in a direction parallel to the main plate and a second reinforcement plate bent toward one side from the first reinforcement plate, and a core layer formed in a space between the main plate and the reinforcement plate and a space between the adjacent reinforcement plates, the method comprising:
filling the space between the main plate and the reinforcement plate and the space between the adjacent reinforcement plates with a non-foaming polymer concentrate;
curing the non-foaming polymer concentrate; and
completing formation of the core layer by the curing of the non-foaming polymer concentrate.

14. The method for manufacturing a composite material-based lightweight structural member having an integrated plate reinforcement of claim 13, wherein in the filling of the spaces with the non-foaming polymer concentrate, a space is formed on a rear surface of the main plate, the non-foaming polymer concentrate is poured, and the plurality of reinforcement plates are inserted to pressurize to a position at a predetermined distance from the main plate, so that the non-foaming polymer concentrate evenly fills the space between the plurality of reinforcement plates by penetrating into the space while overcoming frictional resistance due to viscosity by a pressing force of the reinforcement plate.

15. The method for manufacturing a composite material-based lightweight structural member having an integrated plate reinforcement of claim 13, in at least one of the filling of the spaces with the non-foaming polymer concentrate and the curing of the non-foaming polymer concentrate, a magnet is disposed on at least one surface of the main plate and the reinforcement plate or is sucked by a vacuum suction device to apply a tensile force to maintain flatness.
